# EUROPÄISCHE PATENTSCHRIFT

(11) **EP 3 058 350 B1**
(45) Veröffentlichungstag und Bekanntmachung des Hinweises auf die Patenterteilung: **22.06.2022**
(21) Anmeldenummer: 14799676.3
(22) Anmeldetag: 14.10.2014
(51) Int. Cl.: G01N 21/64, G01N 21/01

(54) **MESSVORRICHTUNG, MESS- UND AUSWERTEVORRICHTUNG UND MESSDATEN-SYSTEM**
MEASURING APPARATUS, MEASURING AND EVALUATION APPARATUS AND MEASUREMENT DATA SYSTEM
DISPOSITIF DE MESURE, DISPOSITIF DE MESURE ET D'ÉVALUATION ET SYSTÈME DE DONNÉES DE MESURE

(30) Priorität: 14.10.2013 EP 13188557
(43) Veröffentlichungstag der Anmeldung: 24.08.2016
(73) Patentinhaber: OASE GmbH, 48477 Hörstel-Riesenbeck (DE)
(72) Erfinder: WILLUWEIT, Thomas, 95030 Hof (DE); GRIESBACH, Ralf, 95030 Hof (DE)
(74) Vertreter: Isarpatent
(86) Internationale Anmeldenummer: PCT/EP2014/072034
(87) Internationale Veröffentlichungsnummer: WO 2015/055663

(56) Entgegenhaltungen:
- WO-A1-2004/106872
- WO-A1-2010/146110
- GB-A- 2 441 833
- US-A1- 2005 168 741
- US-A1- 2005 264 817
- US-A1- 2007 081 159
- US-A1- 2010 302 546
- US-B2- 7 491 366
- "Photodiode", Wikipedia, 27. September 2013 (2013-09-27), Seiten 1-5, XP055167205, Gefunden im Internet: URL:http://de.wikipedia.org/w/index.php?ti tle=Spezial:Buch&bookcmd=download&collecti on_id=45057f5b402986250cef7d19e7e406dd7fe1 8e09&writer=rdf2latex&return_to=Photodiode [gefunden am 2015-02-04]
- "Mini Spectrometer USB", UV-Design Product Notes, 1. September 2006 (2006-09-01), Seiten 1-3, XP055167327, Gefunden im Internet: URL:http://www.uv-design.de/spectro.pdf [gefunden am 2015-02-04]

## Beschreibung

Die vorliegende Erfindung bezieht sich auf eine Messvorrichtung, welche derart ausgebildet ist eine Fluidrobe zu analysieren. Des Weiteren bezieht sich die vorliegende Erfindung auf eine Mess- und Auswertevorrichtung, welche eine derartige Messvorrichtung und eine elektronische Einrichtung zum Auswerten der Messdaten der Messvorrichtung aufweist. Außerdem bezieht sich die vorliegende Erfindung auf ein Messdaten-System welches wenigstens eine Mess- und Auswertevorrichtung und eine zweite elektronische Einrichtung aufweist zum Auswerten und/oder Speichern der Informationen der jeweiligen Mess- und Auswertevorrichtung.

Bisher sind Spektrometer als Messvorrichtung zum Messen, Auswerten und Anzeigen der Konzentration wenigstens eines Analyts in einer Fluidprobe bekannt. Das Spektrometern zugrunde liegende Messverfahren beruht auf dem bekannten physikalischen Phänomen, dass ein Lichtstrahl eine Schwächung (Extinktion) erfährt, wenn er ein Fluid durchdringt. Die Schwächung ist proportional zur Konzentration des Analyts und zur Messstrecke in dem Fluid, welche von dem Lichtstrahl durchdrungen werden muss. Dieser physikalische Zusammenhang wird durch das Lambert-Beersche-Extinktionsgesetz beschrieben. Das Spektrometer wertet seine Messergebnisse zum Bestimmen der Konzentration des Analyts in der Fluidprobe aus und zeigt das Ergebnis der Auswertung auf seinem Display an. Dies hat jedoch den Nachteil, dass eine solche Messvorrichtung zu groß und unhandlich ist, um transportable zu sein und beispielsweise für Messungen vor Ort eingesetzt zu werden.

WO 2010/146110 A1 offenbart ein küvettenloses, portables Spektrometer zum Messen wenigstens eines Analyts in einer Fluidprobe.

Aufgabe der vorliegenden Erfindung ist es, eine verbesserte Messvorrichtung bereitzustellen, welche eine kompaktere Bauweise erlaubt.

Diese Aufgabe wird durch eine Messvorrichtung gemäß dem Patentanspruch 1, eine Mess- und Auswertevorrichtung gemäß dem Patentanspruch 14 und ein Messdaten-System mit dem Patentanspruch 16 gelöst.

Dem gemäß wird eine Messvorrichtung bereitgestellt, welche derart ausgebildet ist eine Fluidprobe oder einer lumineszierenden Probe zu analysieren, wobei die Messvorrichtung eine Strahlungsempfängereinrichtung zum Empfangen eines entlang einer Messstrecke durch die Fluidprobe geleiteten Lichtstrahls oder einer von der lumineszierenden Probe abgegebenen Strahlung aufweist, und wobei die Messvorrichtung wenigstens eine Anschlusseinrichtung zum Anschließen einer externen elektronischen Einrichtung aufweist zum Übertragen der Messsignale der Strahlungsempfängereinrichtung an eine Auswerteeinrichtung der externen elektronische Einrichtung zum Auswerten der Messsignale.

Die der vorliegenden Erfindung zugrunde liegende Idee besteht darin, die Messung einer Fluidprobe oder eine lumineszierenden Probe und die Auswertung der Messergebnisse der Fluidprobe bzw. der fluoreszierenden Probe zu trennen, um dadurch die Messvorrichtung kompakter zu bauen, was insbesondere bei einem portablen Messvorrichtung von Vorteil ist. Dazu erfolgt die Auswertung der Messergebnisse einer Fluidprobe oder lumineszierenden Probe nicht in der Messvorrichtung selbst sondern in einer externen an die Messvorrichtung anschließbaren elektronischen Einrichtung. Lediglich die Messung der Fluidprobe oder der lumineszierenden Probe erfolgt durch die Messvorrichtung.

Aus den Unteransprüchen ergeben sich vorteilhafte Ausgestaltungen und Weiterbildungen der vorliegenden Erfindung.

Die Erfindung wird nachfolgend anhand von Ausführungsbeispielen unter Bezugnahme auf die beiliegenden Figuren der Zeichnung näher erläutert.

Es zeigen:
- Fig. 1: eine Draufsicht auf ein Spektrometer als Messvorrichtung in einer teilweise transparenten und teilweise geschnittenen Darstellung;
- Fig. 2: ein Ausschnitt eines erfindungsgemäßen Ausführungsbeispiels einer Probenaufnahmeeinrichtung und ihrer Aufnahme und eines in der Aufnahme aufgenommenen Probenbehälters eines erfindungsgemäßen Spektrometers als Messvorrichtung;
- Fig. 3: ein Ausschnitt eines nicht erfindungsgemäßen Beispielseiner Probenaufnahmeeinrichtung und ihrer Aufnahme und eines in der Aufnahme aufgenommenen Probenbehälters eines Spektrometers als Messvorrichtung;
- Fig. 4: ein Ausschnitt eines anderen nicht erfindungsgemäßen Beispiels einer Probenaufnahmeeinrichtung und ihrer Probenaufnahme und eines in der Aufnahme aufgenommenen Probenbehälters eines Spektrometers als Messvorrichtung;
- Fig. 5: ein weiteres Beispiel eines Spektrometers als Messvorrichtung,

- Fig. 6: ein Ausführungsbeispiel einer Messvorrichtung, wobei die Messvorrichtung eine lumineszierende Probe misst oder analysiert, wobei bei der Messvorrichtung ein Teil des Gehäuses entfernt ist;
- Fig. 7: die Messvorrichtung gemäß Fig. 6 und ihr Gehäuse,
- Fig. 8: ein nicht erfindungsgemäßes Beispiel einer Messvorrichtung zum Messen oder Analysieren einer lumineszierenden Probe; und
- Fig. 9: ein Diagramm eines Messsystems gemäß einer Ausführungsform der Erfindung.

In den Figuren bezeichnen gleiche Bezugsziffern gleiche oder funktionsgleiche Komponenten, soweit nichts Gegenteiliges angegeben ist.

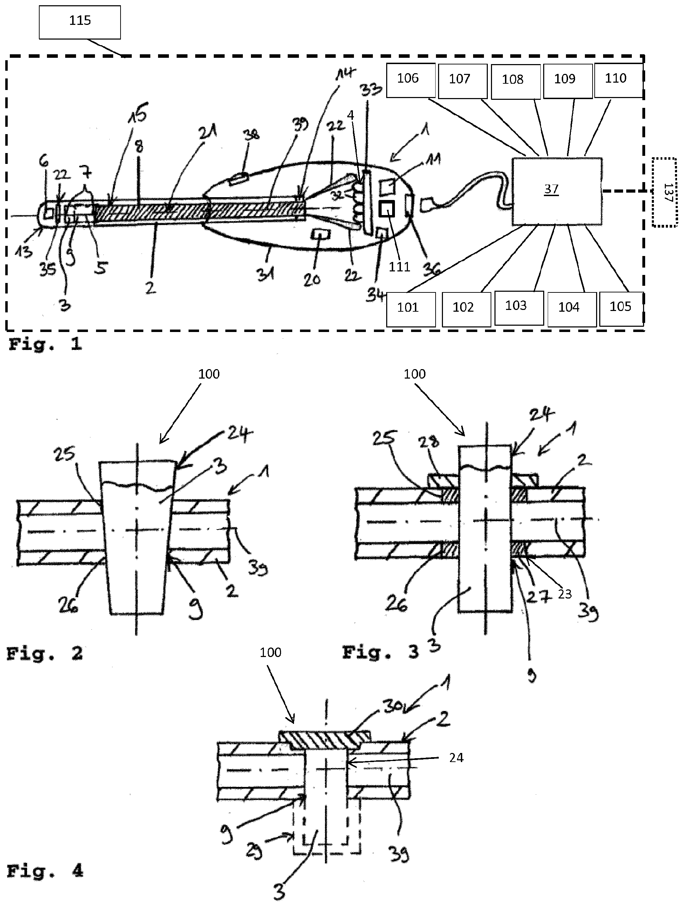

In Fig. 1 ist eine Ausführungsform eines Spektrometers 1 als Messvorrichtung 100 dargestellt.

Das Spektrometer 1 dient dazu eine Fluidprobe 3 zu analysieren. Hierbei wird mittels des Spektrometers 1 beispielsweise die Konzentration wenigstens eines Analyts in der Fluidprobe 3 gemessen.

Die Fluidprobe 3 kann dabei eine Flüssigkeit, ein Gas oder ein Flüssigkeitsnebel sein. Ebenso können in einer flüssigen Fluidprobe oder einer gasförmigen Fluidrobe, wie beispielsweise Rauch, auch zusätzlich Feststoffpartikel enthalten sein.

Das Spektrometer 1 ist als Messvorrichtung 100 derart ausgebildet, dass es klare Fluidproben messen kann. Des Weiteren kann das Spektrometer 1 als Messvorrichtung 100 optional zusätzlich derart ausgebildet sein, dass es trübe Fluidproben messen kann, sofern diese Fluidproben durch das Spektrometer für eine Messung ausreichend mit Licht einer Lichtquelle einer Lichtquellen- oder Beleuchtungseinrichtung 4 des Spektrometers 1 durchdringbar sind. Trübe Fluidproben, die mittels des Spektrometers 1 gemessen werden können, sind beispielsweise dünne Suspensionen aus Feststoffen in Fluiden. Dazu gehören beispielsweise trübe Probenwässer, Porenwässer, Deponiewässer, Abwässer, Suspensionen aus Bodenproben und Düngemittel. Des Weiteren können mittels des Spektrometers 1 auch beispielsweise Körperflüssigkeiten, wie z.B. Serum, Urin usw., gemessen werden.

Das Spektrometer 1 kann z.B. zur Bestimmung der Konzentration von gelösten Wasserinhaltsstoffen eingesetzt werden. Die Wasserprobe kann beispielsweise aus einem Aquarium, Gartenteich oder Schwimmbad usw. stammen. In Bezug auf die Herkunft des Wasser gibt es keine Beschränkungen.

Beispiele für mit dem Spektrometer 1 bestimmbaren Wasserinhaltsstoffe sind Sauerstoff, Ozon, Chlor (freies Chlor, Gesamtchlor), Stickstoffverbindungen (Gesamtstickstoff), Kalium, Eisen, Zink, Schwermetalle, Ammonium, Cyanursäure, Cyanid, Harnstoff, Carbonat (Wasserhärte), Wasserstoffperoxid, Chlorid, Nitrit, Nitrat oder Phosphat. Insbesondere kann mit einem Spektrometer auch der pH-Wert einer Fluidprobe, z.B. einer Wasserprobe, bestimmt werden. Dazu wird diese mit z.B. einem einkomponentigen Indikator, wie Phenolrot, oder mit einem zweikomponentigen Mischindikator, beispielswese Bromthymolblau/Thymolblau, versetzt, der dann photometrisch vermessen wird. Der verwendete Indikator kann von dem Spektrometer 1 hierbei vorzugsweise automatisch erkannt werden.

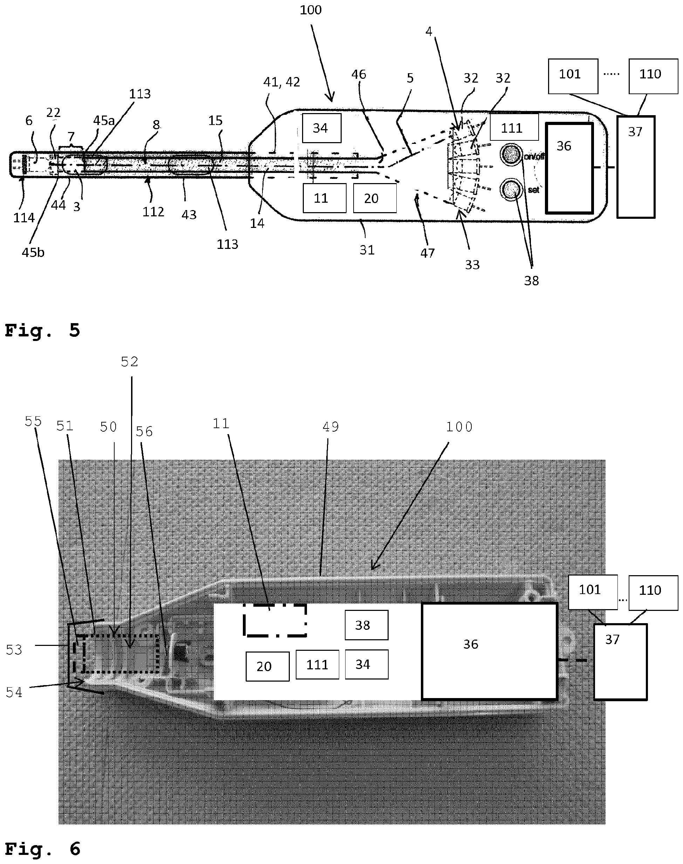

Das in Fig. 1 gezeigte Spektrometer 1 gemäß einer Ausführungsform der Erfindung, weist ein Gehäuse 31 mit einer Lichtquellen- oder Beleuchtungseinrichtung 4 zum Erzeugen wenigstens eines Lichtstrahls 5 auf. Dieser wenigstens eine Lichtstrahl 5 wird durch eine in dem Spektrometer 1 aufgenommene Fluidprobe 3 geleitet. Die Lichtquellen- oder Beleuchtungseinrichtung 4 kann hierbei wenigstens eine LED 32 oder, wie in Fig. 1 dargestellt, ein LED-Array 33 aus mehreren LEDs 32 als Lichtquelle aufweisen, wie in nachfolgender Fig. 5 gezeigt ist. Als LEDS 32 können z.B. Laser-LEDs vorgesehen werden. Die Erfindung ist jedoch nicht auf LEDs 32 und insbesondere Laser-LEDs beschränkt. Es kann jede andere Lichtquelle vorgesehen werden, welche geeignet ist, um eine Fluidprobe mittels des Spektrometers 1 als Messvorrichtung 100 zu messen.

Wie in dem Ausführungsbeispiel in Fig. 1 gezeigt ist, können optional zusätzlich wenigstens eine oder mehrere optische Einrichtung 22 zum Sammeln und/oder Leiten des von dem LED-Arrays 33 erzeugten Lichts in einen optischen Strahlengang 21 des Spektrometers 1 vorgesehen werden. Derartige optische Einrichtungen 22, sind beispielsweise Linsen, Spiegel oder Prismen usw..

Das Spektrometer 1 weist des Weiteren eine Probenaufnahmeeinrichtung 2 mit einer Probenaufnahme 9 für eine Fluidprobe 3 auf. Des Weiteren weist die Probenaufnahmeeinrichtung 2 einen Lichtempfänger oder Strahlungsempfängereinrichtung auf, zum Empfangen des Lichtstrahls 5, der in der Lichtquellen- oder Beleuchtungseinrichtung 4 des Spektrometers 1 erzeugt wird und die in der Probenaufnahmeeinrichtung 9 aufgenommene Fluidprobe 3 entlang einer Messstrecke 7 durchläuft. Als Lichtempfänger oder Strahlungsempfängereinrichtung wird beispielsweise ein Photosensor 6 verwendet, welcher wenigstens eine Photodiode aufweist. Statt eines Photosensors 6 kann jeder andere Lichtempfänger eingesetzt werden, welcher zum Empfangen von Licht der Lichtquellen- oder Beleuchtungseinrichtung 4 des Spektrometers 1 geeignet ist.

Der Photosensor 6 als Strahlungsempfängereinrichtung empfängt und wandelt den auftreffenden Lichtstrahl 5 in elektrische Signale um, welche ausgewertet werden können zum Analysieren oder Untersuchen der Fluidprobe 3. Die elektrischen Signale hängen jeweils beispielsweise von der auftreffenden Lichtleistung und/oder Wellenlänge des Lichtstrahls 5 ab.

Bei der in Fig. 1 gezeigten Ausführungsform des erfindungsgemäßen Spektrometers 1 als Messvorrichtung 100 ist optional ein Analog-/Digital-Wandler 20 vorgesehen, zum Umwandeln eines analogen Signals des Lichtempfängers bzw. Photosensors 6 in Fig. 1 in ein digitales Signal oder umgekehrt zum Übertragen an eine externe elektronische Einrichtung 37, wie z.B. einen PC, ein Smartphone, einen Tablet-PC, einen Server usw., welche die Signale des Lichtempfängers bzw. Photosensors 6 auswertet. Dazu weist die elektronische Einrichtung 37 z.B. eine entsprechende Auswerteeinrichtung 109 auf. Das Ergebnis der Auswertung kann mittels einer entsprechenden Anzeige der elektronischen Einrichtung 37, z.B. einem Display des Smartphones oder einem Bildschirm des PCs, einem Display des Tablet-PCs, einem mit dem Server verbundenen Display oder Bildschirm als Anzeigeeinrichtung 110 usw., angezeigt werden. Als Ergebnis kann beispielsweise die festgestellte Konzentration eines Analyts der Fluidprobe 3 durch die Anzeigeeinrichtung 110 der externen elektronischen Einrichtung angezeigt werden.

Die externe elektronische Einrichtung 37 bildet zusammen mit der Messvorrichtung 100 eine Mess- und Auswertevorrichtung 115. Dies gilt für alle Beispiele, welche mit Bezug auf Fig. 1 und nachfolgende Fig. 2-9 beschrieben werden.

Des Weiteren kann die externe elektronische Einrichtung 37, wie ein Smart-Phone, ein Server, ein PC oder ein Tablet-PC usw. zusätzlich oder alternativ zu der Auswerteeinrichtung 109 und/oder der Anzeigeeinrichtung 110, eine GPS-Einrichtung 101, eine Zeitmesseinrichtung 102, eine Kameraeinrichtung 103, eine Speichereinrichtung 104, eine Sendeeinrichtung 105, eine Empfängereinrichtung 106, eine Scannereinrichtung 107 und/oder eine Mikrophoneinrichtung 108 aufweisen, die zusammen mit der Messvorrichtung 100 genutzt werden kann bzw. können.

Die Daten der GPS-Einrichtung 101 können beispielsweise dazu verwendet werden, um die Position einer durch die Messvorrichtung 100 vorgenommenen Messung zu bestimmen. Hierdurch kann einer Messung die exakte geographische Position zugeordnet werden. Auf diese Weise kann sehr einfach verifiziert werden, ob beispielsweise eine Messung an der richtigen Stelle durchgeführt wurde. Außerdem werden Fehler bei der Positionsbestimmung durch einen Benutzer der Messvorrichtung 100 vermieden.

Die Uhrzeit und/oder die Dauer einer durch die Messvorrichtung 100 vorgenommenen Messung usw. kann durch die Zeitmesseinrichtung 102 bestimmt werden. Dadurch kann beispielsweise verifiziert werden, ob die Messzeit eingehalten und die Messung durch einen Benutzer der Messvorrichtung 100 korrekt durchgeführt wurde.

Des Weiteren kann mittels der Kameraeinrichtung 103 ein Benutzer beispielsweise die Stelle, an welcher er eine Messung durch die Messvorrichtung 100 vorgenommen hat im Bild festhalten, eine Chargennummer der Messprobe oder der Nachweisreagenz fotografieren usw., um nur einige Beispiele zu nennen.

Ebenso kann mittels der Scannereinrichtung 107 z.B. eines Smart-Phones oder Tablet-PCs ein Code, z.B. ein Strichcode, ein 2D-Code usw., eingescannt werden, beispielsweise ein 2D-Code einer für die Messung durch die Messvorrichtung 100 verwendeten Nachweisreagenz usw.. Hierdurch kann beispielsweise überprüft werden, ob das Haltbarkeitsdatum der Nachweisreagenz eingehalten wurde, welche Nachweisreagenz verwendet wurde usw..

Mittels der Mikrophoneinrichtung 108 kann beispielsweise ein Benutzer der Messvorrichtung 100 instruiert werden, wie er die Messvorrichtung 100 zu bedienen hat und/oder der Benutzer kann zusätzliche Kommentare oder Informationen oder eine Protokollierung der Messung mittels der Mikrophoneinrichtung 108 in die externe Messeinrichtung 100 diktieren.

Die Daten der GPS-Einrichtung 101, der Zeitmesseinrichtung 102, der Kameraeinrichtung 103, der Scannereinrichtung 107 und/oder der Mikrophoneinrichtung 108 können den von der Messvorrichtung 100 erhaltenen Messdaten zugewiesen oder zugeordnet werden. Die zumindest ein Teil oder alle Daten oder Signale können in der Speichereinrichtung 104 der externen Einrichtung 37, z.B. eines Smartphones oder Tablet-PCs usw., abgespeichert, in der Auswerteeinrichtung 109 der externen elektronischen Einrichtung 37 ausgewertet, auf der Anzeigeeinrichtung 110, z.B. einem Bildschirm oder Display, der externen elektronischen Einrichtung 37 angezeigt, und/oder an eine weitere externe Einrichtung 137, wie mit einer gepunkteten Linie in Fig. 1 angedeutet ist, beispielsweise einen Server, mittels der Sendeeinrichtung 105 kabellos und/oder kabelgebunden übertragen werden. Ebenso kann die externe elektronische Einrichtung 37 durch die Sendeeinrichtung 105 auch Daten oder Signale, insbesondere Befehle, an die Messvorrichtung 110 durch ihre Sendeeinrichtung 105 kabellos und/oder kabelgebunden übertragen. Dies gilt für alle Beispiele gemäß der Fig. 1-9.

Weiter kann die externe elektronische Einrichtung 37, z.B. das Smartphone oder der Tablet-PC, über die weitere externe Einrichtung 137, z.B. einen Server, Daten oder Signale, insbesondere Befehle usw., empfangen. Beispielsweise kann die externe elektronische Einrichtung 37 über die weitere externe Einrichtung 137 die Messvorrichtung 100 steuern und/oder regeln. Die externe elektronische Einrichtung 37 weist die Empfängereinrichtung 105 zum kabellosen und/oder kabelgebundenen Empfangen von Daten oder Signalen, z.B. Befehlen usw., der Messvorrichtung 100 und der weitere externen elektronischen Einrichtung 137 auf. Dies gilt für alle Beispiele gemäß der Fig. 1-9.

Optional kann das Spektrometers 1 als Messvorrichtung 100 selbst wenigstens eine eigene Speichereinrichtung 111 aufweisen zum Speichern oder Zwischenspeichern beispielsweise der Messdaten oder Messsignale usw.. Auf die Speichereinrichtung 111 kann dabei von der externen elektronischen Einrichtung 37 zugegriffen werden.

Das Spektrometer 1 bildet mit seiner Probenaufnahmeeinrichtung 2 und dem Photosensor 6 eine Messstrecke 7 im Strahlengang 21 des Lichtstrahls 5. In der Probenaufnahme 9 der Probenaufnahmeeinrichtung 2 ist die Fluidprobe 3 in die Messstrecke 7 eingebracht. Anhand der Messstrecke 7 kann z.B. das Volumen der eingebrachten Fluidprobe 3 bestimmt werden. Die Messstrecke 7 gibt dem entsprechend eine Schichtdicke der Fluidprobe 3 vor, welche der Lichtstrahl 5 durchdringen muss, um von der Lichtquellen- oder Beleuchtungseinrichtung 4 zu dem Lichtempfänger oder Photosensor 6 zu gelangen.

Das in dem Ausführungsbeispiel in Fig. 1 gezeigte Spektrometer 1 weist des Weiteren den Mikrokontroller 34 auf, der in dem Gehäuse 31 des Spektrometers 1 angeordnet und mit dem Analog-/Digital-Wandler 20 verbunden ist. Der Mikrokontroller 34 steuert und/oder regelt die Lichtquellen- oder Beleuchtungseinrichtung 4. Hierbei steuert und/oder regelt der Mikrokontroller 34 beispielsweise die Lichtintensität, die Lichtwellenlänge und/oder die Leuchtdauer der Lichtquellen-oder Beleuchtungseinrichtung 4. Der Mikrokontroller 34 ist des Weiteren mit der externen elektronischen Einrichtung 37 verbindbar zum Übertragen der Signale des Lichtempfängers bzw. Photosensors 6 direkt auf die elektronische Einrichtung 37, so dass die elektronische Einrichtung 37 die Signale des Lichtempfängers auswerten kann. Zusätzlich oder alternativ kann der Mikrokontroller 34 auch die Signale des Lichtempfängers 8 in der eigenen Speichereinrichtung 111 als Zwischenspeicher abspeichern und diese anschließend durch die elektronische Einrichtung 37 aus der Speichereinrichtung 111 abgerufen werden. Wie zuvor beschrieben kann dabei ein Analog-/Digital-Wandler 20 vorgesehen werden, welcher die Signale des Lichtempfängers zuvor geeignet umwandelt von beispielsweise einem analogen Signal in ein digitales Signal.

Der Mikrokontroller 34 kann in einer Ausführungsform des erfindungsgemäßen Spektrometers 1 beispielsweise derart ausgebildet sein, die LEDs 32 des LED-Arrays 33 zusammen oder stattdessen einzeln oder unabhängig voneinander anzusteuern. Beispielsweise kann der Mikrokontroller 34 die Lichtquellenoder Beleuchtungseinrichtung 4 abhängig von der empfangenen Lichtintensität durch den Lichtempfänger 6 steuern. Wird beispielsweise zu wenig Licht der Lichtquellen- oder Beleuchtungseinrichtung 4 von dem Lichtempfänger 6 empfangen, so kann die Lichtintensität und/oder Leuchtdauer durch den Mikrokontroller 34 geeignet erhöht werden. Die Erfindung ist aber auf dieses Beispiel nicht beschränkt. So kann neben der Licht- oder Beleuchtungsintensität oder Beleuchtungsstärke und der Beleuchtungsdauer auch beispielsweise ein Beleuchtungsintervall durch den Mikrokontroller 34 gesteuert und/oder geregelt werden, je nach Funktion und Einsatzzweck. Dies gilt für alle Ausführungsformen der Erfindung.

Des Weiteren kann der Mikrokontroller 34 zusätzlich oder alternativ mittels der an das Spektrometer 1 angeschlossenen externen elektronischen Einrichtung 37 steuerbar ausgebildet sein zum Steuern und/oder Regeln der Lichtquellen- oder Beleuchtungseinrichtung 4, wie mit einer gestrichelten Linie in Fig. 1 angedeutet ist. Die Messvorrichtung 100 und/oder die externe elektronische Einrichtung 37 können eine Steuerungseinrichtung, wie z.B. den Mikrokontroller 34 aufweisen, zum Steuern und/oder Regeln der Messvorrichtung 100. Dabei kann Software zum Steuern und/oder Regeln der Messvorrichtung 100 auch in deren eigener Speichereinrichtung 111 abgelegt sein und/oder durch die externe elektronische Einrichtung 37 abgelegt werden zum Steuern und/oder Regeln der Messvorrichtung 100.

Die in dem Gehäuse 31 des Spektrometers 1 aufgenommene Probenaufnahmeeinrichtung 2 ist in dem in Fig. 1 gezeigten Ausführungsbeispiel beweglich in dem Gehäuse 31 angeordnet und in das Gehäuse 31 ein- und ausfahrbar vorgesehen. Dabei kann die Probenaufnahmeeinrichtung 2 optional zusätzlich in verschiedenen vorbestimmten aus- oder eingefahrenen Positionen arretierbar ausgebildet sein. Die Probenaufnahmeeinrichtung 2 ist dabei stufenlos oder stufenweise aus- und einfahrbar ausgebildet.

Des Weiteren ist die ein- und ausfahrbar ausgebildete Probenaufnahmeeinrichtung 2 in dem Gehäuse 31 optional beispielsweise lichtdicht, gasdicht und/oder flüssigkeitsdicht aufgenommen, so dass beispielsweise nicht ungewollt Licht, Gas und/oder Flüssigkeit zwischen der Probenaufnahmeeinrichtung 2 und dem Gehäuse 31 in das Gehäuse 31 eindringen kann.

In einer alternativen Ausführungsform des erfindungsgemäßen Spektrometers 1 ist die Probenaufnahmeeinrichtung 2 fest mit dem Gehäuse 31 verbunden oder einteilig mit dem Gehäuse 31 ausgebildet.

In der Probenaufnahmeeinrichtung 2 ist die Probenaufnahme 9 derart ausgebildet, dass eine mittels des Spektrometers 1 zu untersuchende Fluidprobe 3 in die Probenaufnahme 9 einbringbar ist, wobei die Fluidprobe 3 in der Messtrecke 7 zwischen dem Photosensor 6 und der Lichtquellen- oder Beleuchtungseinrichtung 4 oder einem Lichtleiter 8 der Probenaufnahmeeinrichtung 2 einbringbar ist.

In der in Fig. 1 gezeigten Ausführungsform des Spektrometers 1 als Messvorrichtung 100, ist in der Probenaufnahmeeinrichtung 2 optional zusätzlich der Lichtleiter 8 in dem Strahlengang 21 des Lichtstrahls 5 in Längsrichtung der Probenaufnahmeeinrichtung 2 angeordnet. Der Lichtleiter 8 ist beispielsweise ein Acrylstab, ein Macrolonstab, ein Glasstab oder ein Glasfaserkabel.

Der Lichtleiter 8 ist in dem in Fig. 1 gezeigten Ausführungsbeispiel, an einem ersten Ende 14 fest in dem Gehäuse 31 des Spektrometers 1 angebracht und mit dem zweiten Ende 15 in der Probenaufnahmeeinrichtung 2 aufgenommen, welche entlang des Lichtleiters 8 verschieblich ist. Der Lichtleiter 8 kann optional zusätzlich gegenüber der Probenaufnahmeeinrichtung 2 abgedichtet vorgesehen sein, insbesondere flüssigkeitsdicht 2 und/oder gasdicht. Auf diese Weise wird verhindert, dass wenn die Probenaufnahmeeinrichtung 2 in eine zu analysierende Flüssigkeit eingetaucht wird, die Flüssigkeit ungewollt in das Innere des Gehäuses 31 gelangen kann.

Zwischen dem Photosensor 6 und der Probenaufnahme 9 ist in der Probenaufnahmeeinrichtung 2 optional zusätzliche wenigstens eine optische Einrichtung 22, wie beispielsweise eine Linse 35 angeordnet. Die Linse 35 kann beispielsweise zum Bündeln oder Sammeln des Lichts vorgesehen werden, welches von der Lichtquelleneinrichtung 4 durch die in der Probenaufnahmeeinrichtung 2 aufgenommene Fluidprobe 3 geleitet wird.

Außerhalb der Erfindung kann die Probenaufnahme 9 der Probenaufnahmeeinrichtung 2 derart ausgebildet sein, dass eine Fluidprobe in die Probenaufnahme 9 durch Eintauchen der Probenaufnahmeeinrichtung 2 in die Fluidprobe, z.B. eine Flüssigkeit und/oder ein Gas, einbringbar ist. Zusätzlich oder alternativ kann die Probenaufnahme 9 derart ausgebildet sein einen Probenbehälter, z.B. eine Küvette, mit der Fluidprobe aufzunehmen, wie in nachfolgenden Fig. 2, 3 und 4 beispielhaft gezeigt ist. Die Fig. 2 zeigt ein Ausführungsbeispiel gemäß der Erfindung, die Beispiele von Fig. 3 und 4 entsprechen nicht der Erfindung.

Wie zuvor beschrieben erzeugt die Lichtquellen- oder Beleuchtungseinrichtung 4 mit ihrem LED-Array 33 als Lichtquelle, einen Lichtstrahl 5, welcher von dem Photosensor 6 der Probenaufnahmeeinrichtung 2 empfangbar ist. Der Photosensor 6 ist in einer Sensoraufnahme 13 der Probenaufnahmeeinrichtung 2 aufgenommen und wandelt den auftreffenden Lichtstrahl 5 in elektrische Signale um und leitet diese in dem Ausführungsbeispiel in Fig. 1 an den Analog-/Digital-Wandler 20 weiter, welcher die elektrischen Signale des Photosensors 6 beispielsweise in digitale Signale umwandelt und an den Mikrokontroller 34 weiterleitet. Der Miktrokontroller 34 überträgt die Signale wiederum an eine an das Spektrometer 1 angeschlossene externe elektronische Einrichtung 37 zum Auswerten der Signale und Darstellen des Ergebnisses der Auswertung der Signale, z.B. der Konzentration eines Analyts in einer Fluidprobe. Zusätzlich oder alternativ können die Signale oder Daten auch in der Speichereinrichtung 111 des Spektrometers 1 für die externe elektronische Einrichtung 37 abrufbar zwischengespeichert werden.

Der Analog-/Digital-Wandler 20 ist mit dem Photosensor 6 verbunden, z.B. kabelgebunden usw., zum Empfangen der Signale des Photosensors 6. Die Erfindung ist aber auf eine kabelgebundene Verbindung von Photosensor 6 und Wandler 20 nicht beschränkt. Es kann jede andere Art der Verbindung vorgesehen werden, welche geeignet ist, dass der Wandler 20 die Signale des Photosensors 6 empfangen kann.

Das Spektrometer 1 weist wenigstens eine Anschlusseinrichtung 36 auf, zum Anschließen der externen elektronischen Einrichtung 37, wie beispielsweise ein PC, ein Tablet-PC, Server und/oder ein Smartphone usw., an das Spektrometer 1.

Mittels des Spektrometers 1 werden die Daten des Lichtempfängers, z.B. Photosensors 6, auf die elektronische Einrichtung 37 zur Auswertung übertragen. Das Ergebnis der Messung wird beispielsweise auf einem Display oder Bildschirm der elektronischen Einrichtung 37 angezeigt.

Mittels einer geeigneten Software führt die elektronische Einrichtung 37 die Auswertung der Signale des Lichtempfängers aus. Die Ergebnisse der Auswertung können anschließend auf einem Display oder Bildschirm der elektronischen Einrichtung angezeigt werden. Des Weiteren kann die elektronische Einrichtung 37 optional zusätzlich über eine geeignete Software den Mikrokontroller 34 des Spektrometers 1 steuern und mittels des Mikrokontrollers 34 beispielsweise die Lichtquellenoder Beleuchtungseinrichtung 4 steuern und/oder regeln. Dies erlaubt eine kompakte Bauweise des Spektrometers 1, da die Auswertung und Anzeige der Ergebnisse der Auswertung nicht durch das Spektrometer 1 selbst, sondern eine an das Spektrometer 1 anschließbare externe elektronische Einrichtung erfolgt. Ebenso kann auch die externe elektronische Einrichtung 37 den Mikrokontroller 34 oder eine andere geeignete Steuerungseinrichtung aufweisen zum Steuern und/oder Regeln der Messvorrichtung 100.

Ein Benutzer des Spektrometers 1 als Messvorrichtung 100 kann durch die externe elektronische Einrichtung 37 ein Messprogramm auswählen. Die externe elektronische Einrichtung 37 kann dann den eigenen Mikrokontroller oder den Mikrokontroller 34 der Messvorrichtung 100 entsprechend ansteuern, die vom Benutzer ausgewählte Messung durchzuführen, beispielsweise die Messung des PH-Werts oder Nitrat-Gehalts einer Probe usw..

Derartige Messprogramme sowie andere Softwareprogramme zum Steuern und/oder Regeln der Messvorrichtung 100 können als Software, z.B. als App (Application Software), auf die externe elektronische Einrichtung 37, z.B. ein Smartphone, einen Tablet-PC, einen PC oder einen Server usw., ladbar vorgesehen werden.

Zusätzlich oder alternativ können Softwareprogramme, z.B. Messprogramme usw., über die externe elektronische Einrichtung 37 auch auf der Speichereinrichtung 111 des Spektrometers 1 für den Mikrokontroller 34 des Spektrometers 1 abrufbar abgespeichert werden.

Mittels der Anschlusseinrichtung 36 des Spektrometers 1 kann wenigstens eine externe elektronische Einrichtung 37 angeschlossen werden und die Daten oder Signale des Photosensors 6 auf die elektronische Einrichtung 37 übertragen werden. Die Anschlusseinrichtung 36 des Spektrometers 1 kann dabei beispielsweise einen Kabelanschluss und/oder einen kabellosen Anschluss aufweisen. Der Kabelanschluss kann beispielsweise zum Anschließen eines USB-Kabels eines PCs, Tablet-PCs, Smartphones, Laptops, Severs usw. ausgebildet sein, wobei die Erfindung auf einen derartigen Anschluss nicht beschränkt ist. Als kabelloser Anschluss kann beispielsweise ein Bluetooth-Anschluss, ein Funk-Anschluss usw. vorgesehen werden, wobei die Erfindung auf die genannten Beispiele für kabellose Anschlüsse nicht beschränkt ist.

Die elektronische Einrichtung 37 weist, wie zuvor beschrieben, zum Auswerten von Daten oder Signalen des Spektrometers 1 und insbesondere von Signalen des Lichtempfängers, z.B. Photosensors, eine geeignete Auswertesoftware auf. Die Auswertesoftware kann dabei beispielsweise als App (Application Software) auf die externe elektronische Einrichtung 37 geladen und dort in der Auswerteeinrichtung 109 zur Auswertung der Daten oder Signale des Spektrometers 1 als Messvorrichtung 100 eingesetzt werden. Das Ergebnis der Auswertung der Fluidprobe 3 durch Auswertung der Signale des Lichtempfängers oder Photosensors 6 in Fig. 1, kann, wie zuvor beschrieben, auf einem Display als Anzeigeeinrichtung 110 der elektronischen Einrichtung 37 angezeigt und optional beispielsweise zusätzlich graphisch dargestellt werden. Ebenso kann die externe elektronische Einrichtung 37 zusätzlich eine Steuersoftware aufweisen zum Steuern und/oder Regeln des Mikrokontrollers 34 des Spektrometers 1 und/oder eines eigenen Mikrokontrollers, um über diesen das Spektrometer 1 zu steuern und/oder zu regeln.

Die Auswertesoftware und die Steuersoftware kann z.B. als Auswerte-AP bzw. App (Auswerte-Application oder Auswerte-Anwendung bzw. Auswerte- Application Software) und Steuer-AP bzw. App (Steuer-Application oder Steuer-Anwendung bzw. Steuer-Application Software) für das Spektrometer 1 bereitgestellt werden, welche sich ein Benutzer über seine elektronische Einrichtung 37, wie einen PC, einen Tablet-PC, einen Server oder ein Smartphone beispielsweise über das Internet herunterladen kann. Anschließend kann der Benutzer seine elektronische Einrichtung 37 an das Spektrometer 1 anschließen, eine Messung auswählen, z.B. Ph-Wert messen oder NitratGehalt messen, und eine Fluidprobe 3 mittels der ausgewählten Messung messen und mittels der Auswertesoftware durch seine elektronische Einrichtung 37 auswerten und anzeigen lassen. Dies hat den Vorteil, dass das Spektrometer 1 kompakt und kostengünstig hergestellt werden kann, da beispielsweise ein Display zur Anzeige des Ergebnisses der Probenanalyse entfallen. Des Weiteren kann auf eine eigene Auswerteeinrichtung in dem Spektrometer 1 verzichtet werden, da dazu eine elektronische Einrichtung 37 zum Auswerten an das Spektrometer 1 angeschlossen wird.

Das Spektrometer 1 kann ein netzunabhängiges Spektrometer 1 sein, wie in Fig. 1 dargestellt ist, das eine eigene Energiequelle 11, z.B. einen Akku und/oder eine Batterie aufweist. Ein solches Spektrometer 1 kann somit als portables Spektrometer 1 genutzt werden, da es aufgrund einer eigenen Energiequelle 11 keinen Stromanschluss benötigt und so überall mitgenommen werden kann, um Messungen vor Ort durchzuführen. Ebenso kann das Spektrometer 1 auch ein netzabhängiges Spektrometer sein, welches an eine Stromquelle anschließbar ist. Dazu ist das Spektrometer 1 mittels seiner Anschlusseinrichtung 36 oder einer zusätzlichen nicht dargestellten Anschlussvorrichtung an eine Energieversorgung der elektronischen Einrichtung 37 oder einer anderen externen Energiequelle anschließbar und mit Energie der elektronischen Einrichtung 37 bzw. der externen Energieeinrichtung speisbar und/oder aufladbar.

Wie in dem Ausführungsbeispiel in Fig. 1 gezeigt ist, weist das Spektrometer 1 optional eine Schaltereinrichtung 38 zum An- und Ausschalten des Spektrometers 1 auf. Mittels dieser Schaltereinrichtung 38 werden beispielsweise die Lichtquellen- oder Beleuchtungseinrichtung 4, der Photosensor 6 und der Mikrokontroller 34 an- und ausgeschaltet. Dadurch kann Energie eingespart werden.

Die Messstrecke 7 des Spektrometers 1 kann, wie zuvor beschrieben, fest eingestellt oder unveränderlich vorgesehen werden. Dabei ist die Probenaufnahmeeinrichtung 2 fest mir dem Gehäuse 31 verbunden.

Ebenso kann die Messstrecke 7 des Spektrometers 1 veränderlich oder variable vorgesehen werden. Dazu ist die Probenaufnahmeeinrichtung ein- und ausziehbar in dem Gehäuse 31 des Spektrometers 1 angeordnet

Dadurch können auch Analyten in sehr niedriger oder sehr hoher Konzentration in der Fluidprobe 3 bestimmt werden. Beispielsweise wird die Messstrecke 7 vergleichsweise groß gewählt in dem Fall, dass es sich um einen Analyten handelt, welcher in nur sehr niedriger Konzentration in der Fluidprobe 3 vorhanden ist. Auf diese Weise kann ein geeignet großes Volumen oder eine geeignet große Schichtdicke der Fluidprobe 3 in dem Spektrometer 1 bereitgestellt und durch dieses gemessen werden.

In der in Fig. 1 gezeigten Ausführungsform des erfindungsgemäßen Spektrometers 1 erfolgt das Verändern der Messstrecke 7 indem die Probenaufnahmeeinrichtung 2 in das Gehäuse 31 einund ausgefahren wird. Wird die Probenaufnahmeeinrichtung 2 in das Gehäuse 31 eingefahren, wie mit einer gepunkteten Linie angedeutet ist, so wird die Messstrecke 7 verkürzt. Dadurch wird ein geringeres Volumen oder eine geringere Schichtdicke einer zu messenden Fluidprobe 3 in der Messtrecke 7 der Probenaufnahmeeinrichtung 2 aufgenommen.

Wird dagegen die Probenaufnahmeeinrichtung 2 aus dem Gehäuse 31 ausgefahren, so wird die Messtrecke 7 und dem entsprechend der Querschnitt der Probenaufnahme 9 vergrößert und es kann ein größeres Volumen oder eine größere Schichtdicke einer zu messenden Fluidprobe 3 in der Messtrecke 7 der Probenaufnahmeeinrichtung 2 aufgenommen werden. Dabei kann in einer Ausführungsform des erfindungsgemäßen Spektrometers 1 der in dem Strahlengang der Probenaufnahmeeinrichtung 2 aufgenommene Lichtleiter 8 gegenüber der Probenaufnahmeeinrichtung 2 vorzugsweise zusätzlich abgedichtet sein, insbesondere flüssigkeitsdicht und/oder gasdicht, um ein Eindringen der Fluidprobe 3 in das Gehäuse 31 des Spektrometers 1 zu verhindern.

Ebenso können in einer weiteren Ausführungsform der Erfindung, Probenbehälter mit verschieden großen Querschnitten zur Aufnahme in der Probenaufnahme 9 der Probenaufnahmeeinrichtung 2 vorgesehen werden. Wird die Messstrecke 7 und dem entsprechend der Querschnitt der Probenaufnahme 9 beispielsweise verkleinert, wie in Fig. 1 mit einer gepunkteten Linie angedeutet ist, so kann ein Probenbehälter mit einem entsprechend der Probenaufnahme 9 verkleinerten Querschnitt und einer darin aufgenommenen Fluidprobe 3 in diese eingesetzt werden. In diesem Fall kann auf eine zusätzliche Abdichtung des Lichtleiters 8 gegenüber der Probenaufnahmeeinrichtung 2 verzichtet werden.

In einer alternativen nicht dargestellten Ausführungsform des erfindungsgemäßen Spektrometers 1 als Messvorrichtung ist kein zusätzlicher Lichtleiter 8 in der Probenaufnahmeeinrichtung 2 vorgesehen. Stattdessen wird die Messstrecke 7 direkt zwischen dem Photosensor 6 und der Lichtquellen- oder Beleuchtungseinrichtung 4 vorgesehen. Die Messstrecke 7 wird dabei ebenfalls dadurch verändert, dass die Probenaufnahmeeinrichtung 2 ein- und ausziehbar in dem Gehäuse 31 des Spektrometers 1 angeordnet ist. Ebenso können Probenbehälter mit verschiedenen Querschnittsgrößen eingesetzt und in den entsprechend vergrößerten oder verkleinerten Probenaufnahmequerschnitt der Probenaufnahmeeinrichtung 2 eingesetzt werden, wie zuvor beschrieben.

In Fig. 2 ist ein Ausschnitt einer Probenaufnahme 9 einer Probenaufnahmeeinrichtung 2 gemäß einer Ausführungsform eines erfindungsgemäßen Spektrometers 1 als Messvorrichtung 100 gezeigt. In der Probenaufnahme 9 ist ein Probenbehälter 24 mit einer Fluidprobe 3 zum Analysieren durch das Spektrometer 1 angeordnet. Die Probenaufnahme 9 ist dabei in einer Querschnittsansicht in Längsrichtung der Probenaufnahmeeinrichtung 2 gezeigt. Des Weiteren ist die Längsachse 39 der Probenaufnahmeeinrichtung 2 eingezeichnet. Die Anordnung des Lichtempfängers ist in Fig. 2 sowie den nachfolgenden Fig. 3 und 4 nicht gezeigt aus Gründen der Übersichtlichkeit.

Wie in Fig. 2 gezeigt ist, ist die Probenaufnahme 9 auf beiden Seiten der Probenaufnahmeeinrichtung 2 offen zum Hindurchführen beispielsweise eines Probenbehälters 24 in Querrichtung durch die Probenaufnahmeeinrichtung 2. Die Probenaufnahme 9 der Probenaufnahmeeinrichtung 2 weist dazu an beiden gegenüberliegenden Seiten jeweils eine Öffnung 25, 26 auf, wobei die Öffnungen 25, 26 sich dabei beispielsweise in ihrem Querschnitt derart verjüngen, dass ein Probenbehälter 24 mit einem sich entsprechend verjüngenden Querschnitt darin eingeführt und in der Probenaufnahme 9 gehalten werden kann, wie in dem Ausführungsbeispiel in Fig. 2 gezeigt ist. Wahlweise zusätzlich können die Öffnungen 25, 26 jeweils mit einer zusätzlichen, nicht dargestellten Dichtungseinrichtung versehen werden, zum dichten Verbinden von Probenaufnahme 9 und Probenbehälter 24, wie in nachfolgender Fig. 3 beispielhaft gezeigt ist. Die Dichtungseinrichtung ist derart ausgebildet die Probenaufnahme 9 und den Probenbehälter 24 insbesondere gasdicht, flüssigkeitsdicht und/oder lichtdicht zu verbinden.

Des Weiteren ist in Fig. 3 ein Ausschnitt einer Probenaufnahme 9 eine Probenaufnahmeeinrichtung 2 gemäß einem Beispiel eines nicht erfindungsgemäßen Spektrometers 1 als Messvorrichtung 100 gezeigt. Die Probenaufnahme 9 und der darin aufgenommene Probenbehälter 24 mit einer Fluidprobe 3 sind dabei in einer Querschnittsansicht in Längsrichtung der Probenaufnahmeeinrichtung 2 gezeigt.

Wie in Fig. 3 gezeigt ist, weist die Probenaufnahme 9 der Probenaufnahmeeinrichtung 2 an beiden gegenüberliegenden Seiten jeweils eine Öffnung 25, 26 auf, wobei die Öffnungen 25, 26 dabei denselben Querschnitt aufweisen, so dass ein Probenbehälter 24 mit einem entsprechenden Querschnitt in die Aufnahme 9 eingeführt werden kann. In dem in Fig. 3 gezeigten Beispiel weist die Probenaufnahme 9 beispielsweise zwei kreisförmige Öffnungen 25, 26 auf zur Aufnahme eines zylindrischen Probenbehälters 24.

Zum Halten eines Probenbehälters 24 in der Aufnahme 9 kann die Aufnahme 9 und/oder der Probenbehälter 24 beispielsweise mit einem elastischen Abschnitt 27 oder elastischen Ring versehen sein, z.B. aus Gummi und/oder Schaumstoff, zum Halten des Probenbehälters 24 in der Probenaufnahme 9, nachdem er in die Probenaufnahme 9 eingeführt wurde.

Der elastische Abschnitt 27 der Probenaufnahme 9 lässt sich beim Einführen des Probenbehälters 24 zusammendrücken und verhindert ein ungewolltes Herausrutschen des Probenbehälters 24 aus der Probenaufnahme 9. Optional kann der elastische Abschnitt 27 auch zusätzlich als Dichtungseinrichtung 23 ausgebildet sein, zum zusätzlichen Dichten des Probenbehälters 24 gegenüber der Probenaufnahme 9, und insbesondere gasdichten, flüssigkeitsdichten und/oder lichtdichten Abdichten des Probenbehälters 24 gegenüber der Probenaufnahme 9, so dass kein Gas, keine Flüssigkeit und/oder kein Licht zwischen dem Probenbehälter 24 und der Probenaufnahme 9 durch den elastischen Abschnitt 27 in die Probenaufnahmeeinrichtung 2 hindurchtreten kann.

Zusätzlich oder alternativ kann auch der Probenbehälter 24 mit einer Manschette 28, z.B. einer elastischen oder starren Manschette, bestückt werden und/oder mit einem Flansch (nicht dargestellt) ausgebildet sein, mit welcher bzw. welchem der Probenbehälter 24 auf der Oberseite der Probenaufnahme 9 aufliegen kann. Auf diese Weise kann ebenfalls ein ungewolltes Herausrutschen des Behälters 24 aus der Probenaufnahme 9 verhindert werden. Außerdem kann bei Bedarf eine zusätzliche Dichtungseinrichtung zwischen der Probenaufnahme 9 und dem Probenbehälter 24 vorgesehen werden.

In Fig. 4 ist ein Ausschnitt einer Probenaufnahme 9 einer Probenaufnahmeeinrichtung 2 gemäß einem anderen Beispiel eines nicht erfindungsgemäßen Spektrometers 1 als Messvorrichtung 100 gezeigt. Die Probenaufnahme 9 ist dabei in einer Querschnittsansicht in Längsrichtung der Probenaufnahmeeinrichtung 2 gezeigt.

Wie in Fig. 4 gezeigt ist, bildet die Probenaufnahme 9 eine Vertiefung 29 zum Aufnehmen eines Probenbehälters 24 mit einer Fluidprobe 3. Die Länge der Vertiefung 29 kann dabei durch die Probenaufnahmeeinrichtung 2 bestimmt werden oder die Probenaufnahmeeinrichtung 2 kann im Bereich der Aufnahme 9 zusätzlich vertieft ausgebildet sein, zum Aufnehmen eines Probenbehälters 24, wie in Fig. 4 mit einer gestrichelten Linie angedeutet ist. Zusätzlich kann die Aufnahme 9 und/oder der Probenbehälter 24 mit einem Deckel 30 verschließbar ausgebildet sein, insbesondere gasdicht, flüssigkeitsdicht und/oder lichtdicht.

Die Probenaufnahmeeinrichtung des zuvor mit Bezug auf die Fig. 1 bis 4 beschriebenen Spektrometers 1 als Messvorrichtung 100 kann wahlweise zusätzlich und aus einem beispielsweise säureresistenten Material hergestellt sein, wenn eine zu messende Fluidprobe eine Säure oder säurehaltig ist. Dies gilt für alle Ausführungsformen der Erfindung.

Die zuvor mit Bezug auf Fig. 1 beschriebene externe elektronische Einrichtung 37 bildet eine externe Auswerte- und Anzeigevorrichtung zum Auswerten der Informationen oder Signale des Lichtempfängers 6 des Spektrometers und zum Anzeigen des Ergebnisses oder der Ergebnisse der Auswertung der Messungen des Spektrometers.

Das Spektrometer 1 selbst bildet wiederum lediglich eine Messvorrichtung mit der für die Messung der Fluidprobe erforderlichen Einrichtungen, wie z.B. der Lichtquellen- oder Beleuchtungseinrichtung 4, dem Lichtempfänger 6, der Probenaufnahmeeinrichtung 2, dem Mikrokontroller 34 und dem Wandler 20.

Durch die Abtrennung der Auswertung der Messungen des Spektrometers und der Anzeige eines jeweiligen Ergebnisse der Auswertung von dem Spektrometer und die Beschränkung des Spektrometers auf die Messung und die hierfür erforderlichen Einrichtungen, wie z.B. die Lichtquelleneinrichtung und den Lichtempfänger, kann das Spektrometer als Messvorrichtung 100 klein und kompakt gebaut werden.

In Fig. 5 ist ein Beispiel des Spektrometers 1 als Messvorrichtung 100 gemäß den zuvor beschriebenen Fig. 1-4 gezeigt. Das Spektrometer 1 in Fig. 5 weist dabei eine ausziehbare Messstrecke 7 auf. Die zuvor mit Bezug auf die Fig. 1-4 gemachten Ausführungen zu dem Spektrometer geltend entsprechend auch für das in Fig. 5 gezeigte Spektrometer 1. Daher wird auf die Ausführungen zu den Fig. 1-4 verwiesen, um unnötige Wiederholungen zu vermeiden.

Das Spektrometer 1 als Messvorrichtung 100 in Fig. 5 weist mehrere Lichtquellen als Lichtquellen- oder Beleuchtungseinrichtung auf. Bei den Lichtquellen handelt es sich bevorzugt um LEDs 32, weiter bevorzugt Laser-LEDs. Die Lichtquellen sind dazu eingerichtet, nahezu monochromatisches Licht mit einer Wellenlänge von bevorzugt 250-750 nm zu emittieren. Bevorzugt sind die Lichtquellen dazu eingerichtet, jeweils Licht unterschiedlicher Wellenlängen bzw. unterschiedlicher Wellenlängenbereiche zu emittieren. Beispielsweise kann die eine Lichtquelle dazu eingerichtet sein, Licht mit einer Wellenlänge zwischen 610 und 750 nm und die andere Lichtquelle kann dazu eingerichtet sein, Licht mit einer Wellenlänge zwischen 590 und 610 nm zu emittieren. Die Wahl der jeweiligen Lichtquelle kann von der Fluidprobe 3 und/oder der Analyt-Konzentration, welche es zu messen gilt, abhängen und auch automatisch ausgewählt werden.

Die eine oder mehreren Lichtquellen erzeugen einen Lichtstrahl 5, welcher in Fig. 5 strichpunktiert angedeutet ist. Die mehreren Lichtquellen können in etwa halbkreisförmig angeordnet sein und weiter bevorzugt ein Array 33 ausbilden.

Das Spektrometer 1 als Messvorrichtung 100 weist des Weiteren einen Photosensor 6 zum Empfangen des Lichtstrahls 5 auf. Der Photosensor 6 wandelt den auftreffenden Lichtstrahl 5 in elektrische Signale oder Daten um. Die elektrischen Signale oder Daten hängen jeweils von der auftreffenden Lichtleistung und/oder Wellenlänge des Lichtstrahls 5 ab. Bei dem Photosensor 6 handelt es sich bevorzugt um eine Photodiode.

Ferner ist das Spektrometer 1 mit einer Messstrecke 7 im Strahlengang des Lichtstrahls 5 ausgebildet. In die Messstrecke 7 ist die Fluidprobe 3 einbringbar. Die Messstrecke 7 ist veränderlich vorgesehen. Dazu ist das Spektrometer 1 beispielsweise wie folgt ausgebildet:
In dem Strahlengang des Lichtstrahls 5 ist ein Lichtleiter 8, beispielsweise in Form eines Acrylstabs, Macrolonstabs, Glasstabs oder Glasfaserkabels, angeordnet.

Der Lichtleiter 8 weist einen ersten Abschnitt 14, welcher fest in einem als Gehäuse 31 ausgebildeten Handhabungsteil untergebracht ist. Der Lichtleiter 8 weist weiterhin einen zweiten Abschnitt 15 auf, welcher sich aus dem Gehäuse 31 heraus in eine Hülse 112 erstreckt.

Die Hülse 112 weist einen im Wesentlichen ringförmigen Querschnitt auf. Der Innendurchmesser des ringförmigen Querschnitts der Hülse 112 entspricht im Wesentlichen dem Außendurchmesser des kreisförmigen Querschnitts des Lichtleiters 8.

Die Hülse 112 ist gemäß einem nicht erfindungsgemäßen Beispiel mit mehreren Langlöchern 113 vorgesehen. Dabei können sich, wie in Fig. 5 gezeigt, jeweils zwei Langlöcher 113 gegenüberliegen. Weiterhin können beispielsweise zwei derartiger Paare von gegenüberstehenden Langlöchern 113 entlang des Strahlengangs des Lichtstrahls 5 voneinander beabstandet entlang der Hülse 112 vorgesehen sein. Unabhängig von der Stellung der Hülse 112 in Bezug auf das Gehäuse 31 bzw. den Lichtleiter 8 steht immer eines der Langlöcher 113 in Verbindung mit der Messstrecke 7, das heißt, dass die Fluidprobe 3 aus dem Fluid, beispielsweise einem Gewässer, entnommen werden kann. Eine derartige Probenentnahme kann gemäß dem vorliegenden Beispiel einfach durch Eintauchen der Langlöcher 113, damit also auch Eintauchen der Hülse 112 samt dem Endstück 114, in das Fluid vorgenommen werden.

Die Hülse 112 weist einen ersten Abschnitt 41 auf, mit welchem sie sich in das Gehäuse 31 erstreckt. Der Abschnitt 41 ist entlang des Strahlengangs des Lichtstrahls 5 in dem Gehäuse 31 in einem Aufnahmeraum 42 desselben beweglich aufgenommen. Beispielsweise kann der Abschnitt 41 mit einem Außengewinde vorgesehen sein, welches in ein entsprechendes Innengewinde in dem Gehäuse 31 eingreift. Alternativ kann der Abschnitt 41 außenseitig mit Rasten vorgesehen sein, welche mit entsprechenden Gegenrasten in dem Gehäuse 31 in Eingriff steht und somit eine stufenweise Verschiebbarkeit der Hülse 112 bezüglich des Gehäuses 31 erlauben.

Ein zweiter Abschnitt 43 der Hülse 112 erstreckt sich nach außen aus dem Gehäuse 31 heraus und umgibt dabei den zweiten Abschnitt 15 des Lichtleiters 8. An den zweiten Abschnitt 43 der Hülse 112 schließt sich ein dritter Abschnitt 44 der Hülse 112 an, welcher die Fluidprobe 3 an ihrem Umfang begrenzt. An den dritten Abschnitt 44 schließt sich wiederum das Endstück 114 an. Das Endstück 114 verschließt den ringförmigen Querschnitt der Hülse 112 fluiddicht.

Die Messstrecke 7 wird somit zwischen dem vorderen Ende 45b des Endstück und einer Stirnseite 45a des Lichtleiters 8 definiert.

Das Endstück 114 weist den Photosensor 6 sowie optional eine zusätzliche Linse 22 als ein Beispiel für eine optische Einrichtung auf, welche z.B. den einfallenden Lichtstrahl 5 auf den Photosensor 6 bündelt. Weitere Beispiele für optische Einrichtungen neben einer Linse sind z.B. Spiegel und Prismen. Derartige optische Einrichtung 22 können in allen Ausführungsformen der Erfindung, wie sie in den Fig. 1-9 beispielhaft beschrieben sind, eingesetzt werden und zum Bündeln, Sammeln, Leiten und/oder Streuen von Licht beispielsweise der Lichtquellen- oder Beleuchtungseinrichtung sowie einer nachfolgend beschriebenen lumineszierenden Probe verwendet werden.

Indem nun die Hülse 112 in den Aufnahmebereich oder Aufnahmeraum 42 des Gehäuses 31 hinein oder aus dem Aufnahmebereich oder Aufnahmeraum 42 des Gehäuses 31 herausbewegt wird, wird die Messstrecke 7 eingestellt und kann somit einfach an die Anforderungen für eine Konzentrationsmessung eines jeweiligen Analyts angepasst werden. Denkbar ist hier auch, dass die Hülse 112 automatisiert, beispielsweise mittels eines entsprechenden Stellmotors, in das Gehäuse 31 hinein und aus dem Gehäuse 31 herausgefahren wird.

An der anderen Stirnseite 46 des Lichtleiters 8 wird der Lichtstrahl 5 eingekoppelt. Dabei können Mittel 47 vorgesehen sein, um wahlweise die eine oder die andere Lichtquelle, hier LED 32, lichtleitend mit dem Lichtleiter 8 zu verbinden.

Des Weiteren kann das Spektrometer 1 optional einen zusätzlichen Mikrokontroller 34 aufweisen und/oder mit einem solchen Mikrokontroller einer externen Einrichtung 37 koppelbar sein. Ebenso kann das Spektrometer 1 als Messvorrichtung 100, wie zuvor beschrieben, wahlweise zusätzlich wenigstens eine eigene Speichereinrichtung 111, eine Energiequelle 11, einen Analog-/Digital Wandler 20 und/oder eine Schaltereinrichtung 38 zum An- und Ausschalten des Spektrometers 1 als Messvorrichtung 100 aufweisen.

Das Spektrometer 1 als Messvorrichtung 100 weist, wie zuvor das mit Bezug auf die Fig. 1-4 beschrieben Spektrometer, wenigstens eine Anschlusseinrichtung 36 auf, zum Anschließen einer externen elektronischen Einrichtung 37, wie beispielsweise ein PC, ein Tablet-PC, ein Server und/oder ein Smartphone usw.. Die Anschlusseinrichtung 36 ist dabei ein Kabelanschluss, z.B. ein USB-Kabelanschluss usw., und/oder ein kabelloser Anschluss, z.B. ein Bluetooth-Anschluss oder Funk-Anschluss usw..

Mittels des Spektrometers 1 als Messvorrichtung 100 werden, wie zuvor beschrieben die Daten oder Signale des Photosensors 6 als Lichtempfänger, auf die elektronische Einrichtung 37 zur Auswertung durch eine Auswerteeinrichtung 109 übertragen. Das Ergebnis der Messung wird beispielsweise auf einer Anzeigeeinrichtung 110 wie z.B. einem Display oder Bildschirm der elektronischen Einrichtung 37 angezeigt. Mittels einer geeigneten Software führt die elektronische Einrichtung 37 die Auswertung der Signale des Lichtempfängers aus.

Des Weiteren kann die elektronische Einrichtung 37 optional zusätzlich über eine geeignete Software den Mikrokontroller 34 des Spektrometers 1 steuern und mittels des Mikrokontrollers 34 beispielsweise die Lichtquellen- oder Beleuchtungseinrichtung 4 und/oder den Photosensor 6 steuern und/oder regeln.

Die externe elektronische Einrichtung 37, beispielsweise ein Smart-Phone, ein PC, ein Server oder ein Tablet-PC usw., weist, wie zuvor mit Bezug auf die Fig. 1-4 beschrieben wurde, eine GPS-Einrichtung 101, eine Zeitmesseinrichtung 102, eine Kameraeinrichtung 103, eine Speichereinrichtung 104, eine Sendeeinrichtung 105, eine Empfängereinrichtung 106, eine Scannereinrichtung 107 und/oder eine Mikrophoneinrichtung 108 auf, die zusammen mit der Messvorrichtung 100 genutzt werden kann bzw. können, wie zuvor beschrieben.

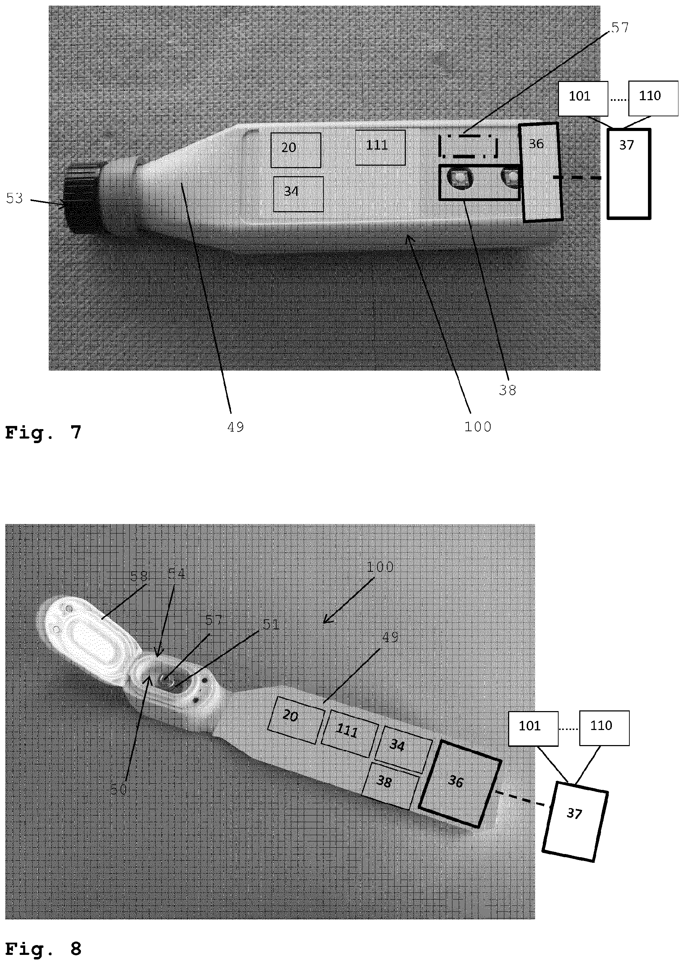

In den nachfolgenden Figuren 6 und 7 ist ein weiteres Beispiel einer nicht erfindungsgemäßen Messvorrichtung 100 gezeigt. Die Fig. 6 und 7 zeigen die Messvorrichtung 100 in einer Draufsicht, wobei in Fig. 6 ein Teil des Gehäuses 49 entfernt worden ist. Die in den Fig. 6 und 7 gezeigte Messvorrichtung 100 ist hierbei derart ausgebildet, dass lumineszierende Proben gemessen oder analysiert werden können.

Lumineszenz ist die optische Strahlung eines physikalischen Systems, die beim Übergang von einem angeregten Zustand zum Grundzustand entsteht. Ursache ist hierbei strahlende Desaktivierung.

Je nach Art der Anregung unterscheidet man verschiedene Arten der Lumineszenz, darunter beispielsweise die sog. Photolumineszenz, die sog. Chemolumineszenz und die sog. Biolumineszenz.

Bei der Photolumineszenz erfolgt eine Anregung des Systems durch Photonen. Dabei unterscheidet man je nach Zeitdauer zwischen Anregung und Emission des Lichtes zwischen Phosphoreszenz und Fluoreszenz. Fluoreszenz ist die spontane Emission von Licht kurz nach der Anregung eines Materials. Phosphoreszenz ist wiederum die Eigenschaft eines Stoffes, nach einem Beleuchten mit Licht, beispielsweise mit sichtbarem Licht oder UV-Licht, im Dunkeln nachzuleuchten. Ursache ist strahlende Desaktivierung.

Bei der Chemolumineszenz erfolgt die Anregung des Systems durch eine chemische Reaktion. Beispielsweise kann hierbei Luminol zum Nachweis von Blut eingesetzt werden.

Bei der Biolumineszenz erfolgt die Anregung des Systems durch eine chemische Reaktion in einem lebenden Organismus, beispielsweise einer Zellen, einem Bakterium oder einem Tier, wie z.B. einem Leuchtkäfer, in welchem Luciferin oxidiert wird.

Zum Analysieren einer lumineszierenden Probe, weist die Messvorrichtung 100 in dem Gehäuse 49 einen Probenaufnahmeraum 50 auf, in welchen ein Probenbehälter 51 mit der lumineszierenden Probe 52 einbringbar und analysierbar ist. Der Probenbehälter 51 ist dabei beispielsweise mittels eines Deckels verschließbar, insbesondere dicht verschließbar, so dass die Probe nicht ungewollt aus dem Probenbehälter 51 entweichen kann.

Der Probenbehälter 51 ist hierbei transparent, beispielsweise aus einem transparenten Kunststoff oder einem transparenten Glas, zum Hindurchlassen der von der lumineszierenden Probe 52 abgegebenen Strahlung, z.B. sichtbares Licht, und gegebenenfalls zum Hindurchlassen von Strahlung wenigstens einer zusätzlichen Beleuchtungseinrichtung 55 zum Beleuchten der lumineszierenden Probe 52, um diese zum Nachleuchten anzuregen.

Der Probenbehälter 51 kann dabei fest oder lösbar in dem Gehäuse 31 integriert sein. Ist der Probenbehälter 51 lösbar in dem Gehäuse 49 integriert, so kann er leicht aus dem Gehäuse 49 durch eine entsprechende Gehäuseöffnung 54 entnommen, mit der lumineszierenden Probe 52 gefüllt und anschließend in das Gehäuse 49 eingesetzt werden. In dem Fall, dass der Probenbehälter 51 fest in dem Gehäuse 49 integriert ist, kann der Deckel zum Befüllen des Probenbehälters 51 entfernt und nach dem Befüllen des Probenbehälters 51 diesen wieder verschließen. Der Deckel kann ebenfalls wie der Probenbehälter 51 transparent ausgebildet sein oder auch opak sein, je nachdem ob z.B. eine zusätzliche Beleuchtungseinrichtung 55 verwendet und wo diese angeordnet wird.

Die Gehäuseöffnung 54 zum Einsetzen und/oder Befüllen des Probenbehälters 51 ist vorzugsweise mit einem Deckelelement, z.B. einer Verschlusskappe 53, verschließbar ausgebildet, insbesondere lichtdicht verschließbar ausgebildet. Auf diese Weise kann sichergestellt werden, dass kein Licht von außen in das Gehäuse 49 und dessen Probenaufnahmeraum 50 eindringen und das Messergebnis verfälschen kann.

In dem Gehäuse 49, vorzugsweise in dem Probenaufnahmeraum 50 des Gehäuses 49, ist des Weiteren wenigstens eine Strahlungsempfängereinrichtung 56 vorgesehen, zum Empfangen der von der lumineszierenden Probe 52 abgegebenen Strahlung und Umwandeln in elektrische Signale. Als Strahlungsempfängereinrichtung 56 zum Empfangen von Strahlung, wie z.B. Licht usw., der lumineszierenden Probe 52 kann beispielsweise ein Lichtsensor oder Photosensor eingesetzt werden. Der Photosensor kann hierbei wenigstens eine Photodiode aufweisen. Statt eines Lichtsensors oder Photosensors, kann auch jede andere geeignete Strahlungsempfängereinrichtung oder Kombination von Strahlungsempfängereinrichtungen vorgesehen werden, die zum Empfangen der von einer lumineszierenden Probe abgegeben Strahlung, wie z.B. Licht usw., geeignet ist.

Wahlweise zusätzlich kann des Weiteren zum Analysieren einer photolumineszierenden Probe als einem Beispiel für eine lumineszierende Probe 52, in dem Gehäuse 49 die wenigstens eine zusätzliche Beleuchtungseinrichtung 55 vorgesehen werden. Mittels der Beleuchtungseinrichtung 55 wird die lumineszierenden Probe 52 mit einer geeigneten Strahlung beleuchtet, um die lumineszierende Probe 52 zum Nachleuchten anzuregen. Derartig lumineszierende oder photolumineszierende Proben 52 sind beispielsweise fluoreszierende Proben oder phosphorisierende Proben. Die Beleuchtungseinrichtung 55 ist dabei ebenfalls z.B. im Probenaufnahmeraum 50 angeordnet, wie mit einer gestrichelten Linie in Fig. 6 angedeutet ist. Beispielsweise kann die Beleuchtungseinrichtung 55 auch in den Deckel des Probenbehälters 51 integriert sein oder an jeder anderen für eine Messung geeigneten Stelle des Probenaufnahmeraums 50 angeordnet sein.

Beispielsweise können mehrere Beleuchtungseinrichtungen 55 vorgesehen werden, wobei die Beleuchtungseinrichtungen 55 alle Licht derselben Wellenlänge oder Licht unterschiedlicher Wellenlänge abstrahlen zum Beleuchten der lumineszierenden Probe 52. Dadurch kann eine zu untersuchenden lumineszierenden Probe 52, beispielsweise abwechselnd, mit Licht einer unterschiedlichen Wellenlänge beleuchtet werden, um z.B. mehrere oder verschiedene Analyte zu bestimmen.

Die Messvorrichtung 100 ist mit einer externen elektronischen Einrichtung 37 mittels wenigstens einer Anschlusseinrichtung 36 verbindbar, wobei die Anschlusseinrichtung 36 einen Kabelanschluss und/oder einen kabellosen Anschluss aufweist. Der Kabelanschluss kann, wie zuvor mit Bezug auf die Fig. 1-5 beschrieben. beispielsweise zum Anschließen eines USB-Kabels eines PCs, Tablet-PCs, Smartphones, Laptops, Severs, USB-Sticks usw. ausgebildet sein, wobei die Erfindung auf einen derartigen Anschluss nicht beschränkt ist. Als kabelloser Anschluss kann beispielsweise ein Bluetooth-Anschluss, ein Funk-Anschluss usw. vorgesehen werden, wobei die Erfindung auf die genannten Beispiele für kabellose Anschlüsse nicht beschränkt ist.

Die externe elektronische Einrichtung 37, wie beispielsweise ein Smart-Phone, ein Server oder ein Tablet-PC usw. kann, wie zuvor mit Bezug auf die Fig. 1-5 beschrieben wurde, eine GPS-Einrichtung 101, eine Zeitmesseinrichtung 102, eine Kameraeinrichtung 103, eine Speichereinrichtung 104, eine Sendeeinrichtung 105, eine Empfängereinrichtung 106, eine Scannereinrichtung 107 und/oder eine Mikrophoneinrichtung 108 aufweisen, die zusammen mit der Messvorrichtung 100 genutzt werden kann bzw. können.

Optional kann die Messvorrichtung 100 des Weiteren selbst wenigstens eine eigene Speichereinrichtung 111 aufweisen zum Speichern oder Zwischenspeichern beispielsweise der Messdaten oder Messsignale usw.. Auf die Speichereinrichtung 111 kann dabei von der externen elektronischen Einrichtung 37 zugegriffen werden.

Darüber hinaus kann die Strahlungsempfängereinrichtung 56 der Messvorrichtung 100 mit einer Auswerteeinrichtung 109 der externen elektronischen Einrichtung 37 verbunden und die Signale oder Daten der Strahlungsempfängereinrichtung 56 kabellos oder kabelgebunden an die Auswerteeinrichtung 109 übertragen werden. Dabei werden beispielsweise die Signale oder Daten der Strahlungsempfängereinrichtung 56 zum Analysieren der lumineszierenden Probe 52 in der Auswerteeinrichtung 109 der externen elektronischen Einrichtung 37 ausgewertet. Des Weiteren können die Ergebnisse der Auswertung auf einer Anzeigeeinrichtung 110, z.B. einem Display oder Bildschirm, der externen elektronischen Einrichtung 37 angezeigt werden. Ebenso können die Daten oder Signale der Messvorrichtung 100 auch in der Speichereinrichtung 104 der externen elektronischen Einrichtung 37 gespeichert werden.

Des Weiteren kann das Spektrometer 1, wie zuvor beschrieben, optional einen zusätzlichen Mikrokontroller 34 aufweisen und/oder mit einem solchen Mikrokontroller einer externen Einrichtung 37 koppelbar sein. Der Mikrokontroller 34 kann beispielsweise zum Steuern und/oder Regeln der Beleuchtung der jeweiligen Beleuchtungseinrichtung 55 und/oder zum Steuern und/oder Regeln der Empfindlichkeit der Strahlungsempfängereinrichtung 56 eingesetzt werden usw.. Beispielsweise kann der Mikrokontroller 34 die Beleuchtungsdauer, die Beleuchtungsstärke, das Beleuchtungsintervall der Beleuchtungseinrichtung 55 steuern und/oder regeln usw.. Die Erfindung ist jedoch auf die genannten Beispiele nicht beschränkt. Mittels des Mikrokontrollers 34 können des Weiteren auch mehrere Beleuchtungseinrichtungen 55 gemeinsam oder unabhängig voneinander angesteuert werden zum Analysieren einer lumineszierenden Probe 52 in dem Probenaufnahmeraum 50 der Messvorrichtung 100.

Ebenso kann die Messvorrichtung 100, wie zuvor beschrieben, wahlweise zusätzlich wenigstens die eigene Speichereinrichtung 111, eine Energiequelle 11, einen Analog-/Digital Wandler 20 und/oder eine Schaltereinrichtung 38 zum An- und Ausschalten der Messvorrichtung 100 aufweisen.

Der Probenaufnahmeraum 50 kann außerdem in dem Gehäuse 49 der Messvorrichtung 100 zusätzlich lichtdicht verschließbar oder von Umgebungslicht abgeschirmt ausgebildet sein, so dass außer Licht einer gegebenenfalls zusätzlich vorhandenen Beleuchtungseinrichtung 55 zum gezielten Beleuchten der lumineszierenden Probe 52 in dem Probenaufnahmeraum 50 kein Licht von außerhalb des Gehäuses 49 der Messvorrichtung 100 oder auch, sofern vorhanden, von Lichtquellen innerhalb des Gehäuses 49 ungewollt in den Probenaufnahmeraum 50 und in die dort enthaltene Probe 52 eindringen kann.

In Fig. 7 ist die Messvorrichtung 100 gemäß Fig. 6 und ihr Gehäuse 49 gezeigt. Wie zuvor mit Bezug auf Fig. 6 beschrieben ist die Gehäuseöffnung 54 zum Einsetzen und/oder Befüllen des Probenbehälters 51 mit einem Deckelelement, z.B. einer Verschlusskappe 53 in Fig. 7, vorzugsweise dicht verschlossen, insbesondere zumindest lichtdicht. Bei einem lichtdichten Verschließen der Gehäuseöffnung dringt kein Licht von außen ungewollt in das Gehäuse 49 ein. Wie zuvor mit Bezug auf Fig. 6 beschrieben, kann der Probenaufnahmeraum innerhalb des Gehäuses 49 ebenfalls zusätzlich lichtdicht oder von Umgebungslicht abgeschirmt ausgebildet sein. Auf diese Weise wird beispielsweise eine Probe nur durch eine vorhandene zusätzliche Beleuchtungseinrichtung 55 aber nicht durch weitere im Inneren des Gehäuses gegebenenfalls vorhandene leuchtende Einrichtungen ungewollt beleuchtet.

Wie in Fig. 7 gezeigt, kann die Messvorrichtung 100 als portable Messvorrichtung 100 ausgebildet sein und die zuvor genannte eigene Energiequelle 11 aufweisen, wie mit einer strichpunktierten Linie in Fig. 7 angedeutet ist, zum Speisen von Einrichtungen, wie z.B. einer Beleuchtungseinrichtung 55 und/oder der Strahlungsempfängereinrichtung 56 mit Energie. Die Energiequelle 11 ist dabei beispielsweise eine Batterieeinrichtung und/oder ein Akku. Mittels der Anschlusseinrichtung 36, z.B. eines Kabelanschlusses, kann beispielsweise eine externe Energiequelle angeschlossen werden, um die Messvorrichtung 100 mit Energie zu versorgen.

In einer Ausführungsform der nicht erfindungsgemäßen Messvorrichtung gemäß der Fig. 6 und 7 kann das Deckelelement 53 zum Verschließen der Gehäuseöffnung gleichzeitig zum Verschließen des Probenbehälters 51 ausgebildet sein, so dass der separate Deckel für den Probenbehälter entfallen kann.

Die zuvor mit Bezug auf die Fig. 6 und 7 beispielhaft beschriebene Messvorrichtung 100 kann als lumineszierende Probe fest, flüssige, pastöse, pulverförmige und/oder gasförmige Proben sowie Organismen, Zellen, Tiere, wie beispielsweise Insekten usw., sofern sie lumineszierend sind, analysieren.

In Fig. 8 ist ein nicht erfindungsgemäßes Beispiel einer Messvorrichtung 100 gezeigt, welche, wie die Messvorrichtung in den Fig. 6 und 7, derart ausgebildet ist, lumineszierende Proben zu messen oder zu analysieren. Die Messvorrichtung 100 gemäß Fig. 8 weist dabei im Wesentlichen denselben Aufbau auf, wie die Messvorrichtung gemäß Fig. 6 und 7, so dass auf die Beschreibung in den Fig. 6 und 7 verwiesen wird, um unnötige Wiederholungen zu vermeiden.

Die Messvorrichtung 100 weist zum Analysieren einer lumineszierenden Probe ein Gehäuse 49 mit einem Probenaufnahmeraum 50 auf, in welchen ein Probenbehälter 51 mit der lumineszierenden Probe einbringbar und analysierbar ist. Der Probenbehälter 51 ist dabei beispielsweise mittels eines Deckels 57 verschließbar, insbesondere dicht verschließbar, so dass die Probe nicht ungewollt aus dem Probenbehälter 51 entweichen kann.

Der Probenbehälter 51 ist hierbei transparent zum Hindurchlassen der von der lumineszierenden Probe abgegebenen Strahlung, und gegebenenfalls zum Hindurchlassen von Strahlung wenigstens einer zusätzlichen Beleuchtungseinrichtung zum Beleuchten der lumineszierenden Probe, um diese zum Nachleuchten anzuregen.

Der Probenbehälter 51 kann dabei fest oder lösbar in dem Gehäuse 49 integriert sein. Ist der Probenbehälter 51, z.B. eine Glasviole, lösbar in dem Gehäuse 49 integriert, so kann er leicht aus dem Gehäuse 49 durch eine entsprechende Gehäuseöffnung 54 des Gehäuses 49 entnommen, mit der lumineszierenden Probe gefüllt und anschließend in das Gehäuse 49 wieder eingesetzt werden. In dem Fall, dass der Probenbehälter 51 fest in dem Gehäuse 49 integriert ist, kann der Deckel 57 zum Befüllen des Probenbehälters 51 entfernt und nach dem Befüllen des Probenbehälters 51 diesen wieder verschließen. Der Deckel kann ebenfalls wie der Probenbehälter transparent ausgebildet sein oder auch opak oder teilweise opak.

Die Gehäuseöffnung 54 des Gehäuses 49 zum Einsetzen und/oder Befüllen des Probenbehälters 51 ist mit einem Deckelelement, z.B. einer Verschlussklappe 58 oder einer nicht dargestellten Verschlusskappe, verschließbar ausgebildet, insbesondere lichtdicht verschließbar ausgebildet. Die Verschlussklappe 58 ist dabei schwenkbar an dem Gehäuse 49 der Messvorrichtung 100 befestigt, wie in dem Ausführungsbeispiel in Fig. 8 gezeigt ist.

Auf diese Weise kann sichergestellt werden, dass kein Licht von außen in das Gehäuse 49 und dessen Probenaufnahmeraum 50 eindringen und das Messergebnis verfälschen kann.

In dem Probenaufnahmeraum 50 des Messkopfs, ist des Weiteren beispielsweise wenigstens eine Strahlungsempfängereinrichtung vorgesehen, zum Empfangen der von der lumineszierenden Probe abgegebenen Strahlung und Umwandeln in elektrische Signale. Als Strahlungsempfängereinrichtung zum Empfangen von Strahlung, wie z.B. Licht usw., der lumineszierenden Probe kann beispielsweise ein Lichtsensor, Photomultiplier, Avalanche-Dioden oder Photosensor eingesetzt werden. Der Photosensor kann hierbei wenigstens eine Photodiode aufweisen. Statt eines Lichtsensors, Photomultiplier, Avalanche-Dioden oder Photosensors, kann auch jede andere geeignete Strahlungsempfängereinrichtung oder Kombination von Strahlungsempfängereinrichtungen vorgesehen werden, die zum Empfangen der von einer lumineszierenden Probe abgegeben Strahlung, wie z.B. Licht usw., geeignet ist.

Wahlweise zusätzlich kann des Weiteren zum Analysieren einer photolumineszierenden Probe als einem Beispiel für eine lumineszierende Probe, in dem Gehäuse 49 die wenigstens eine zusätzliche Beleuchtungseinrichtung vorgesehen werden. Mittels der Beleuchtungseinrichtung wird die lumineszierenden Probe mit einer geeigneten Strahlung beleuchtet, um die lumineszierende Probe zum Nachleuchten anzuregen. Derartig lumineszierende oder photolumineszierende Proben sind beispielsweise fluoreszierende Proben oder phosphorisierende Proben. Die Beleuchtungseinrichtung ist dabei ebenfalls z.B. im Probenaufnahmeraum 50 angeordnet.

Beispielsweise können mehrere Beleuchtungseinrichtung vorgesehen werden, wobei die Beleuchtungseinrichtungen alle Licht derselben oder Licht unterschiedlicher Wellenlänge zum Beleuchten der lumineszierenden Probe abstrahlen.

Die Messvorrichtung 100 ist mit einer externen elektronischen Einrichtung 37 mittels wenigstens einer Anschlusseinrichtung 36 verbindbar, wobei die Anschlusseinrichtung 36 einen Kabelanschluss und/oder einen kabellosen Anschluss aufweist. Der Kabelanschluss kann, wie zuvor mit Bezug auf die Fig. 1-7 beschrieben. beispielsweise zum Anschließen eines USB-Kabels eines PCs, Tablet-PCs, Smartphones, Laptops, Severs, USB-Sticks usw. ausgebildet sein, wobei die Erfindung auf einen derartigen Anschluss nicht beschränkt ist. Als kabelloser Anschluss kann beispielsweise ein Bluetooth-Anschluss, ein Funk-Anschluss usw. vorgesehen werden, wobei die Erfindung auf die genannten Beispiele für kabellose Anschlüsse nicht beschränkt ist.

Die externe elektronische Einrichtung 37, wie z.B. ein Smart-Phone, ein Server oder ein Tablet-PC usw. kann eine GPS-Einrichtung 101, eine Zeitmesseinrichtung 102, eine Kameraeinrichtung 103, eine Speichereinrichtung 104, eine Sendeeinrichtung 105, eine Empfängereinrichtung 106, eine Scannereinrichtung 107 und/oder eine Mikrophoneinrichtung 108 aufweisen, die zusammen mit der Messvorrichtung 100 genutzt werden kann bzw. können.

Optional kann die Messvorrichtung 100 auch selbst wenigstens eine eigene Speichereinrichtung 111 aufweisen zum Speichern oder Zwischenspeichern beispielsweise der Messdaten oder Messsignale usw.. Auf die Speichereinrichtung 111 kann dabei von der externen elektronischen Einrichtung 37 zugegriffen werden.

Die Strahlungsempfängereinrichtung der Messvorrichtung 100 kann mit einer Auswerteeinrichtung 109 der externen elektronischen Einrichtung 37 verbunden sein, um die Signale oder Daten der Strahlungsempfängereinrichtung kabellos oder kabelgebunden an die Auswerteeinrichtung 109 zu übertragen. Dabei werden beispielsweise die Signale oder Daten der Strahlungsempfängereinrichtung zum Analysieren der lumineszierenden Probe in der Auswerteeinrichtung 109 der externen elektronischen Einrichtung 37 ausgewertet. Weiter können die Ergebnisse der Auswertung auf einer Anzeigeeinrichtung 110, z.B. einem Display oder Bildschirm, der externen elektronischen Einrichtung 37 angezeigt werden. Ebenso können die Daten oder Signale der Messvorrichtung 100 auch in einer Speichereinrichtung 104 der externen elektronischen Einrichtung 37 gespeichert werden.

Des Weiteren kann die Messvorrichtung 100, wie zuvor beschrieben, selbst optional einen zusätzlichen Mikrokontroller 34 aufweisen und/oder mit einem solchen Mikrokontroller einer externen Einrichtung 37 koppelbar sein. Der Mikrokontroller 34 kann beispielsweise zum Steuern und/oder Regeln der Beleuchtung der jeweiligen Beleuchtungseinrichtung und/oder zum Steuern und/oder Regeln der Empfindlichkeit der Strahlungsempfängereinrichtung eingesetzt werden usw.. Beispielsweise kann der Mikrokontroller 34 die Beleuchtungsdauer, die Beleuchtungsstärke, das Beleuchtungsintervall der Beleuchtungseinrichtung steuern und/oder regeln usw.. Die Erfindung ist jedoch nicht auf die genannten Beispiele beschränkt. Dies gilt für alle Ausführungsformen der Erfindung. Mittels des Mikrokontrollers 34 können des Weiteren auch mehrere Beleuchtungseinrichtungen gemeinsam oder unabhängig voneinander angesteuert werden zum Analysieren einer lumineszierenden Probe in dem Probenaufnahmeraum 50 der Messvorrichtung 100.

Ebenso kann die Messvorrichtung 100, wie zuvor beschrieben, wahlweise zusätzlich neben der wenigstens einen eigenen Speichereinrichtung 111, eine Energiequelle 11, einen Analog-/Digital Wandler 20 und/oder eine Schaltereinrichtung 38 zum An- und Ausschalten der Messvorrichtung 100 aufweisen.

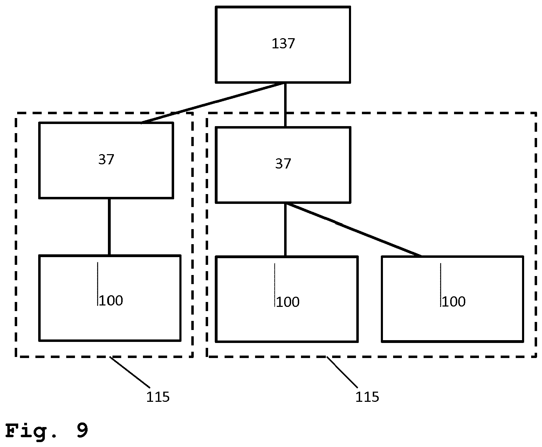

In Fig. 9 ist ein Diagramm eines Messdaten-Systems dargestellt. Das Messdaten-System weist dabei eine erste elektronische Einrichtung 137, beispielsweise einen Server, einen PC, ein Smartphone oder einen Tablet-PC, mehrere zweite elektronische Einrichtungen 37, insbesondere Smartphones oder Tablet-PCs, und mehrere Messvorrichtungen 100 auf. Die erste elektronische Einrichtung 137 ist dabei kabellos und/oder kabelgebunden mit den zweiten elektronischen Einrichtungen 37 verbindbar, wie zuvor beispielhaft mit Bezug auf das Ausführungsbeispiel in Fig. 1 beschrieben wurde und bildet mit dieser eine Mess- und Auswertevorrichtung 115. Die zweite elektronische Einrichtung 37 weist dabei eine Empfängereinrichtung auf zum Empfangen von Daten oder Signalen usw. der Messvorrichtung 100 und der zweiten elektronischen Einrichtung 137. Des Weiteren kann die zweite elektronische Einrichtung 37 Daten oder Signale usw. durch ihre Sendeeinrichtung an die Messvorrichtung 100 und die erste elektronische Einrichtung 137 übertragen.

Die zweiten elektronischen Einrichtungen 37 sind jeweils mit einer oder mehreren zugeordneten Messvorrichtungen 100 kabellos und/oder kabelgebunden verbindbar, wie ebenfalls zuvor mit Bezug auf das Beispiel in Fig. 1 sowie die Beispiele in Fig. 2-8 beschrieben wurde.

Die Messvorrichtungen 100 sind als Spektrometer oder Messvorrichtung zum Messen oder Analysieren lumineszierender Proben ausgebildet. Derartige Messvorrichtungen 100 wurden zuvor anhand der Ausführungsbeispiel in den Fig. 1-8 beschrieben. Mittels der jeweiligen Messvorrichtung 100 wird eine Probe vor Ort gemessen oder analysiert, beispielsweise eine Wasserprobe an einem Brunnen in Afrika. Die Messdaten, beispielsweise analoge und/oder digitale Signale der Messvorrichtung 100, werden von der Messvorrichtung 100 an die zugeordnete zweite elektronische Einrichtung 37 übertragen und von deren Empfängereinrichtung empfangen, beispielsweise kabellos mittels einer Bluetooth- oder Funk-Schnittstelle oder kabelgebunden mittels z.B. einer USB-Schnittstelle.

Die zweite elektronische Einrichtung 37 kann die Messsignale beispielsweise in ihrer Auswerteeinrichtung auswerten und an die erste elektronische Einrichtung 137, beispielsweise einen zentralen Server in Deutschland, z.B. kabellos übertragen, z.B. mittels einer Funkschnittstelle über einen Satelliten. Die zweite elektronische Einrichtung 37 weist zum kabellosen Empfangen und Übertragen die Empfängereinrichtung und die Sendeeinrichtung auf, wie zuvor beschrieben wurde mit Bezug auf die Fig. 1-8.

Die erste oder übergeordnete elektronische Einrichtung 137 kann die Ergebnisse der Auswertung der Messvorrichtung 100 abspeichern und weiter verwenden, um diese beispielsweise zu verwalten, zu prüfen, auszuwerten usw.. Des Weiteren können die Ergebnisse der Auswertung oder Prüfung von dem zentralen Server beispielsweise von anderen elektronischen Einrichtungen z.B. in Umweltbehörden weltweit abgerufen werden.

Die zweite elektronische Einrichtung 37 kann wie zuvor mit Bezug auf die Fig. 1-8 beschrieben wurde, nicht nur die Signale oder Messsignal der Messvorrichtung in ihrer Auswerteeinrichtung auswerten, sondern zusätzlich oder alternativ zu der Auswerteeinrichtung, eine GPS-Einrichtung, eine Zeitmesseinrichtung, eine Kameraeinrichtung, eine Speichereinrichtung, eine Scannereinrichtung, eine Anzeigeeinrichtung, eine Sendeeinrichtung, eine Empfängereinrichtung und/oder eine Mikrophoneinrichtung aufweisen, die zusammen mit der Messvorrichtung 100 genutzt werden kann bzw. können.

Dadurch können neben den Messdaten, insbesondere den analogen und/oder digitalen Signalen der Messvorrichtung, weitere Information oder Daten der GPS-Einrichtung, der Zeitmesseinrichtung, der Kameraeinrichtung, der Scannereinrichtung, und/oder der Mikrophoneinrichtung usw. zugeordnet und an die erste oder übergeordnete elektronische Einrichtung übertragen werden, beispielsweise mittels der Sendeeinrichtung.

So kann z.B. die geographische Position einer durch die Messvorrichtung 100 durchgeführten Messung durch die GPS-Einrichtung bestimmt und als zusätzliche Information oder Daten an die erste elektronische Einrichtung 137 mit übertragen werden. Gleiches gilt für die Bestimmung der Uhrzeit und/oder Dauer einer durch die Messvorrichtung 100 durchgeführten Messung. Diese Informationen oder Daten können durch die Zeitmesseinrichtung bestimmt und als zusätzliche Information oder Daten an die erste elektronische Einrichtung 137 ebenfalls mit übertragen werden. Ebenso kann mittels der Scannereinrichtung beispielsweise ein Code einer Chargennummer einer zur Messung oder Analyse verwendeten Substanz eingescannt und als zusätzliche Information an die erste elektronische Einrichtung 137 weitergeleitet werden. Außerdem können Fotos beispielsweise der Örtlichkeit an welchem eine Messung durch die Messvorrichtung 100 durchgeführt wurde durch die Kameraeinrichtung aufgezeichnet und an die erste elektronische Einrichtung 137 übermittelt werden.

Die erste elektronische Einrichtung 137, z.B. ein zentraler Server, kann alle diese Informationen abspeichern und optional zusätzlich verwalten oder auswerten. Beispielsweise kann die elektronische Einrichtung 137 anhand des eingescannten Codes der Chargennummer bestimmen, ob das Haltbarkeitsdatum eingehalten wurde, die richtige Substanz zum Durchführen der Messung verwendet wurde, welche Messung durchgeführt wurde, z.B. eine Ph-Wertmessung usw.. Anhand der Daten der Zeitmesseinrichtung kann bestimmt werden, ob beispielsweise die Messdauer für die Messung durch die Messvorrichtung eingehalten wurde usw.. Anhand der GPS-Daten kann des Weiteren bestimmt werden, ob an der richtigen Stelle gemessen wurde usw.. Dadurch können Messungen zuverlässig überwacht und kontrolliert und des Weiteren erheblich vereinfacht werden. Beispielsweise können durch die GPS-Funktion automatisch die Positionsdaten für die Messung exakt bestimmt werden. Des Weiteren können von der ersten elektronischen Einrichtung 137 beispielsweise auch Informationen oder Daten an die zweite oder untergeordnete elektronische Einrichtung 37 übermittelt werden und von der Empfängereinrichtung der zweiten elektronischen Einrichtung 37 bei einer kabellosen Schnittstelle, z.B. einem Bluetooth- oder Funk-Anschluss, empfangen werden. Beispielsweise kann die erste oder übergeordnete elektronische Einrichtung 137 der zweiten oder untergeordneten elektronischen Einrichtung 37 mitteilen, wenn ein Fehler in der Messung vorliegt weil z.B. das Haltbarkeitsdatum der zur Messung verwendeten Substanz überschritten wurde, die falsche Substanz für die Messung verwendet wurde, die Messzeit nicht eingehalten wurde und/oder an der falschen Stelle gemessen wurde. Ebenso kann die erste oder übergeordnete elektronische Einrichtung 137 auch die zweiten oder untergeordneten elektronischen Einrichtungen anweisen, welche Messung oder Messungen durchzuführen sind.

Obwohl die vorliegende Erfindung vorstehend anhand der bevorzugten Ausführungsbeispiele beschrieben wurde, ist sie darauf nicht beschränkt, sondern auf vielfältige Art und Weise modifizierbar.

Der Begriff Licht umfasst in der vorliegenden Beschreibung das für den Menschen sichtbare Licht als auch Licht außerhalb des für den Menschen sichtbaren Bereichs, je nach Funktion und Einsatzzweck der Lichtquellen- oder Beleuchtungseinrichtung sowie der Art der lumineszierenden Probe.

### Bezugszeichenliste

- 1: Spektrometer
- 2: Probenaufnahmeeinrichtung
- 3: Fluidprobe
- 4: Lichtquellen- oder Beleuchtungseinrichtung
- 5: Lichtstrahl
- 6: Photosensor
- 7: Messstrecke
- 8: Lichtleiter
- 9: Probenaufnahme
- 11: Energiequelle
- 13: Sensoraufnahme
- 14: erster Abschnitt (Lichtleiter)
- 15: zweiter Abschnitt (Lichtleiter)
- 20: Analog-/Digital-Wandler
- 21: optischer Strahlengang
- 22: optische Einrichtung
- 23: Dichtungseinrichtung
- 24: Probenbehälter
- 25: Öffnung (Probenaufnahmeeinrichtung)
- 26: Öffnung (Probenaufnahmeeinrichtung=
- 27: elastischer Abschnitt
- 28: Manschette
- 29: Vertiefung
- 30: Deckel
- 31: Gehäuse
- 32: LED
- 33: LED-Array
- 34: Mikrokontroller
- 35: Linse
- 36: Anschlusseinrichtung
- 37: elektronische Einrichtung
- 38: Schaltereinrichtung
- 39: Längsachse
- 41: erster Abschnitt (Hülse)
- 42: Aufnahmeraum
- 43: zweiter Abschnitt (Hülse)
- 44: dritter Abschnitt (Hülse)
- 45a: Stirnseite (Lichtleiter)
- 45b: vorderes Ende
- 46: andere Stirnseite (Lichtleiter)
- 47: Mittel
- 49: Gehäuse
- 50: Probenaufnahmeraum
- 51: Probenbehälter
- 52: Probe
- 53: Deckel
- 54: Gehäuseöffnung
- 55: Beleuchtungseinrichtung
- 56: Strahlungsempfängereinrichtung
- 57: Deckel
- 58: Verschlussklappe

- 100: Messvorrichtung
- 101: GPS-Einrichtung
- 102: Zeitmeßeinrichtung
- 103: Kameraeinrichtung
- 104: Speichereinrichtung
- 105: Sendeeinrichtung
- 106: Empfängereinrichtung
- 107: Scannereinrichtung
- 108: Mikrophoneinrichtung
- 109: Auswerteeinrichtung
- 110: Anzeigeeinrichtung
- 111: Speichereinrichtung
- 112: Hülse
- 113: Langlöcher
- 114: Endstück
- 115: Mess- und Auswertevorrichtung
- 137: externe elektronische Einrichtung

## Patentansprüche

1. Messvorrichtung (100), welche derart ausgebildet ist eine Fluidprobe (3) zu analysieren,
wobei die Messvorrichtung (100) ein Gehäuse (31) mit einer Lichtquellen- oder Beleuchtungseinrichtung (4) zum Erzeugen wenigstens eines Lichtstrahls (5) aufweist, wobei in dem Strahlengang des Lichtstrahls (5) ein Lichtleiter (8) vorgesehen ist,
wobei die Messvorrichtung (100) eine Hülse (112) als eine Probenaufnahmeeinrichtung (2) aufweist, mit einer Probenaufnahme (9), die sich in Querrichtung durch die Hülse (112) erstreckt,
wobei die Hülse (112) ein äußeres Ende und ein inneres Ende aufweist, und die Hülse (112) mit ihrem inneren Ende in dem Gehäuse (31) aufgenommen ist,
wobei der Lichtleiter (8) mit einem ersten Ende (14), fest in dem Gehäuse (31) angebracht ist und einem zweiten Ende (15) in der Hülse (112) aufgenommen ist,
wobei die Messvorrichtung (100) eine Strahlungsempfängereinrichtung (6) am äußeren Ende der Hülse (112) zum Empfangen eines entlang einer Messstrecke (7) durch die Fluidprobe (3) geleiteten Lichtstrahls (5) aufweist,
wobei die Messvorrichtung wenigstens eine Anschlusseinrichtung (36) zum Anschließen einer externen elektronischen Einrichtung (37) aufweist zum Übertragen der Messsignale der Strahlungsempfängereinrichtung (6) an eine Auswerteeinrichtung (109) der externen elektronische Einrichtung (37) zum Auswerten der Messsignale,
**dadurch gekennzeichnet,**
**dass** die Probenaufnahme (9) ausgebildet ist mit einem Probenbehälter (24) mit einer Fluidprobe (3) bestückbar zu sein, wobei die Probenaufnahme (9) an beiden gegenüberliegenden Seiten jeweils eine Öffnung (25, 26) in der Hülse (112) aufweist zum Hindurchführen des Probenbehälters (24), wobei die beiden Öffnungen (25, 26) sich in ihrem Querschnitt derart verjüngen, dass ein Probenbehälter (24) mit einem sich entsprechend verjüngenden Querschnitt darin eingeführt und in der Probenaufnahme (9) gehalten werden kann.

2. Messvorrichtung (100) nach Anspruch 1,
**dadurch gekennzeichnet,**
**dass** die Anschlusseinrichtung (36) ein Kabelanschluss, insbesondere ein USB-Kabelanschluss, oder ein kabelloser Anschluss, insbesondere eine Bluetooth oder Funk-Anschluss, ist.

3. Messvorrichtung (100) nach Anspruch 1 oder 2,
**dadurch gekennzeichnet,**
**dass** die Messvorrichtung (100) eine Beleuchtungseinrichtung (4) zum Erzeugen des Lichtstrahls (5) aufweist, wobei die Beleuchtungseinrichtung (4) vorzugsweise wenigstens eine LED (32), insbesondere Laser-LED, oder ein LED-Array (33) aufweist, wobei die LEDs (32) des LED-Arrays (33) insbesondere einzeln oder gemeinsame ansteuerbar sind.

4. Messvorrichtung (100) nach einem der Ansprüche 1 bis 3, **dadurch gekennzeichnet,**
**dass** die Messstrecke (7) im Strahlengang des Lichtstrahls (5) gebildet ist, in welchen die Fluidprobe (3) einbringbar ist.

5. Messvorrichtung (100) nach einem der Ansprüche 1 bis 4, **dadurch gekennzeichnet,**
**dass** die Probenaufnahmeeinrichtung (2) in dem Gehäuse (31) der Messvorrichtung (100) fest vorgesehen ist zum Bereitstellen einer konstanten Messstrecke (7) oder in das Gehäuse (31) ein- und ausfahrbar vorgesehen ist zum Bereitstellen einer variablen Messstrecke (7), wobei die Messtrecke (7) vergrößert wird durch Ausfahren der Probenaufnahmeeinrichtung (2) aus dem Gehäuse (31) und verkürzt wird durch Einfahren der Probenaufnahmeeinrichtung (2) in das Gehäuse.

6. Messvorrichtung (100) nach Anspruch 5,
**dadurch gekennzeichnet,**
**dass** die Probenaufnahmeeinrichtung (2) entlang des Lichtleiters in das Gehäuse (31) ein - und ausfahrbar ist.

7. Messvorrichtung (100) nach einem der Ansprüche 1 bis 6, **dadurch gekennzeichnet,**
**dass** die Messvorrichtung (100, 1) einen Mikrokontroller (34) zum Steuern und/oder Regeln der Beleuchtungseinrichtung (4) aufweist, wobei der Mikrokontroller (34) insbesondere durch die externe elektronische Einrichtung (37) steuerbar und/oder regelbar ist, wobei vorzugsweise die Beleuchtungsdauer, die Beleuchtungsstärke und/oder das Beleuchtungsintervall der Beleuchtungseinrichtung (4) durch den Mikrokontroller steuerbar und/oder regelbar ist.

8. Messvorrichtung (100) nach einem der vorangehenden Ansprüche,
**dadurch gekennzeichnet,**
**dass** die Messvorrichtung (100, 1) einen Analog-/DigitalWandler (20) aufweist, welcher analoge Signale der Strahlungsempfängereinrichtung (6) in digitale Signale wandelt und an den Mikrokontroller (34) und/oder an die an die Anschlusseinrichtung (36) angeschlossene externe elektronische Einrichtung (37) überträgt.

9. Messvorrichtung (100) nach einem der vorangehenden Ansprüche,
**dadurch gekennzeichnet,**
**dass** das die Messvorrichtung (100, 1) eine eigene Energiequelle (11) aufweist und/oder mittels der Anschlusseinrichtung (36) an eine externe Energiequelle anschließbar ist, und wobei die Messvorrichtung (1) vorzugsweise eine Schaltereinrichtung (38) aufweist zum Ein- und Ausschalten der Messvorrichtung (1).

10. Messvorrichtung (100) nach einem der vorangehenden Ansprüche,
**dadurch gekennzeichnet,**
**dass** die Messvorrichtung (100, 1) eine Speichereinrichtung (111) aufweist.

11. Messvorrichtung (100) nach einem der vorangehenden Ansprüche,
**dadurch gekennzeichnet,**
**dass** die Messvorrichtung (100) wenigstens eine optische Einrichtung, insbesondere wenigstens eine Linse, einen Spiegel oder ein Prisma aufweist.

12. Messvorrichtung (100) nach einem der Ansprüche 1 bis 10, **dadurch gekennzeichnet,**
**dass** die Probenaufnahme (9) derart ausgebildet ist in die Fluidprobe (3) einbringbar und mit einem Probenbehälter (24) mit der Fluidprobe (3) bestückbar zu sein.

13. Messvorrichtung (100) nach einem der vorangehenden Ansprüche,
**dadurch gekennzeichnet,**
**dass** wenigstens eine Öffnung (25, 26) der Probenaufnahme (9) eine Dichtungseinrichtung aufweist zum Dichten der Probenaufnahme (9) gegenüber einem in der Probenaufnahme (9) aufgenommenen Probenbehälter (24).

14. Mess- und Auswertevorrichtung (115) aufweisend eine Messvorrichtung (100) nach einem der vorangehenden Ansprüche und eine elektronische Einrichtung (37) welche an die Messvorrichtung (100) angeschlossen ist.

15. Mess- und Auswertevorrichtung (115) nach Anspruch 2- 14,
wobei die elektronische Einrichtung (37) eine Auswerteeinrichtung (109) zum Auswerten der Messsignale der Messvorrichtung (100) aufweist, wobei die elektronische Einrichtung (37) vorzugsweise eine Anzeigeeinrichtung (110), eine GPS-Einrichtung (101), eine Zeitmesseinrichtung (102), eine Kameraeinrichtung (103), eine Speichereinrichtung (104), eine Sendeeinrichtung (105), eine Empfängereinrichtung (106), eine Scannereinrichtung (107) und/oder eine Mikrophoneinrichtung (108) aufweist, wobei die elektronische Einrichtung (37) besonders bevorzugt die Messsignale mit Informationen der GPS-Einrichtung (101), der Zeitmesseinrichtung (102), der Kameraeinrichtung (103), der Speichereinrichtung (104), der Scannereinrichtung (107), und/oder der Mikrophoneinrichtung (108) verknüpft und/oder auswertet und wobei die elektronische Einrichtung (37) ein Smartphone, ein PC, ein Tablet-PC, ein Server oder ein Laptop ist.

16. Messdaten-System aufweisend wenigstens eine Mess- und Auswertevorrichtung (115) gemäß einem der Ansprüche 14 bis 15 und eine zweite elektronische Einrichtung (137).

17. Messdaten-System nach Anspruch 16,
wobei die zweite elektronische Einrichtung (137) mit der jeweils elektronischen Einrichtung (37) der Mess- und Auswertevorrichtung (115) kabellos und/oder kabelgebunden verbindbar ist und wobei die zweite elektronische Einrichtung (137) ein Server, ein PC, ein Smartphone, eine Smart-Watch, ein Laptop oder ein Tablet-PC ist.

## Claims

1. Measuring apparatus (100) configured to analyse a fluid sample (3),
the measuring apparatus (100) having a housing (31) with a light source device or illumination device (4) for generating at least one light beam (5),
a light guide (8) being provided in the beam path of the light beam (5),
the measuring apparatus (100) having a sleeve (112) as a sampler device (2), with a sampler (9) which extends through the sleeve (112) in a transverse direction,
the sleeve (112) having an outer end and an inner end, and the inner end of the sleeve (112) being received in the housing (31),
a first end (14) of the light guide (8) being attached fixedly in the housing (31), and a second end (15) being received in the sleeve (112),
the measuring apparatus (100) having a radiation receiver device (6) at the outer end of the sleeve (112) for receiving a light beam (5) guided through the fluid sample (3) along a measurement distance (7),
the measuring apparatus having at least one connection device (36) for connecting an external electronic device (37) for transmitting the measurement signals of the radiation receiver device (6) to an evaluation device (109) of the external electronic device (37) to evaluate the measurement signals,
**characterised**
**in that** the sampler (9) is formed to be equipable with a sample container (24) with a fluid sample (3), the sampler (9) having an opening (25, 26) in the sleeve (112) on each of two opposite sides for passing the sample container (24) through, the two openings (25, 26) tapering in cross section in such a way that a sample container (24) having a correspondingly tapering cross section can be inserted into them and held in the sampler (9).

2. Measuring apparatus (100) according to claim 1, **characterised**
**in that** the connection device (36) is a cable connector, in particular a USB cable connector, or a wireless connector, in particular a Bluetooth or radio connector.

3. Measuring apparatus (100) according to either claim 1 or claim 2,
**characterised**
**in that** the measuring apparatus (100) has an illumination device (4) for generating the light beam (5), the illumination device (4) preferably having at least one LED (32), in particular a laser LED, or an LED array (33), the LEDs (32) of the LED array (33) in particular being individually or jointly actuable.

4. Measuring apparatus (100) according to any of claims 1 to 3,
**characterised**
**in that** the measurement path (7) is formed in the beam path of the light beam (5), into which the fluid sample (3) can be introduced.

5. Measuring apparatus (100) according to any of claims 1 to 4,
**characterised**
**in that** the sampler device (2) is provided fixedly in the housing (31) of the measuring apparatus (100) to provide a constant measurement distance (7) or is provided extendable and retractable into and out of the housing (31) to provide a variable measurement distance (7), the measurement distance (7) being increased by extending the sampler device (2) out of the housing (31) and decreased by retracting the sampler device (2) into the housing.

6. Measuring apparatus (100) according to claim 5, **characterised**
**in that** the sampler device (2) can be retracted and extended into and out of the housing (31).

7. Measuring apparatus (100) according to any of claims 1 to 6,
**characterised**
**in that** the measuring apparatus (100, 1) has a microcontroller (34) for controlling and/or regulating the illumination device (4), the microcontroller (34) in particular being controllable and/or regulable by the external electronic device (37), the illumination duration, illumination intensity and/or illumination interval of the illumination device (4) preferably being controllable and/or regulable by the microcontroller.

8. Measuring apparatus (100) according to any of the preceding claims,
**characterised**
**in that** the measuring apparatus (100, 1) has an analogue/digital converter (20) which converts analogue signals of the radiation receiver device (6) into digital signals and transmits them to the microcontroller (34) and/or to the external electronic device (37) connected to the connection device (36).

9. Measuring apparatus (100) according to any of the preceding claims,
**characterised**
**in that** the measuring apparatus (100, 1) has a dedicated power source (11) and/or can be connected to an external power source by means of the connection device (36), and wherein the measuring apparatus (1) preferably has a switch device (38) for switching the measuring apparatus (1) on and off.

10. Measuring apparatus (100) according to any of the preceding claims,
**characterised**
**in that** the measuring apparatus (100, 1) has a storage device (111).

11. Measuring apparatus (100) according to any of the preceding claims,
**characterised**
**in that** the measuring apparatus (100) has at least one optical device, in particular at least one lens, mirror or prism.

12. Measuring apparatus (100) according to any of claims 1 to 10,
**characterised**
**in that** the sampler (9) is formed so as to be introducible into the fluid sample (3) and equipable with a sample container (24) with the fluid sample (3).

13. Measuring apparatus (100) according to any of the preceding claims,
**characterised**
**in that** at least one opening (25, 26) of the sampler (9) has a sealing device for sealing the sampler (9) off from a sample container (24) received in the sampler (9).

14. Measuring and evaluation apparatus (115) having a measuring apparatus (100) according to any of the preceding claims and an electronic device (37) connected to the measuring apparatus (100).

15. Measuring and evaluation apparatus (115) according to claim 14,
wherein the electronic device (37) has an evaluation apparatus (109) for evaluating the measurement signals of the measuring apparatus (100), the electronic device (37) preferably having a display device (110), a GPS device (101), a time measurement device (102), a camera device (103), a storage device (104), a transmitter device (105), a receiver device (106), a scanner device (107) and/or a microphone device (108), the electronic device (37) particularly preferably linking the measurement signals to information from the GPS device (101), the time measurement device (102), the camera device (103), the storage device (104), the scanner device (107) and/or the microphone device (108) and/or evaluating them, and the electronic device (37) being a smartphone, PC, tablet PC, server or laptop.

16. Measurement data system having at least a measuring and evaluation apparatus (115) according to any of claims 14 to 15 and a second electronic device (137).

17. Measurement data system according to claim 16,
wherein the second electronic device (137) can in each case be connected in a wired or wireless manner to the respective electronic device (37) of the measuring and evaluation device (115), and wherein the second electronic device (137) is a server, PC, smartphone, smartwatch, laptop or tablet PC.

## Revendications

1. Dispositif de mesure (100), qui est conçu de manière à analyser un échantillon de fluide (3),
le dispositif de mesure (100) comportant un boîtier (31) avec un dispositif de source lumineuse ou d'éclairage (4) destiné à générer au moins un rayon lumineux (5), un guide d'ondes optiques (8) étant prévu dans la trajectoire du rayon lumineux (5),
le dispositif de mesure (100) comportant un manchon (112) comme dispositif de réception d'échantillon (2), avec un logement d'échantillon (9) qui s'étend dans la direction transversale à travers le manchon (112),
le manchon (112) comportant une extrémité extérieure et une extrémité intérieure et le manchon (112) étant reçu avec son extrémité intérieure dans le boîtier (31),
le guide d'ondes optiques (8) étant monté fixement avec une première extrémité (14) dans le boîtier (31) et reçu avec une seconde extrémité (15) dans le manchon (112),
le dispositif de mesure (100) comportant un dispositif récepteur de rayon (6) sur l'extrémité extérieure du manchon (112) pour recevoir un rayon lumineux (5) guidé à travers l'échantillon de fluide (3) le long d'un tronçon de mesure (7),
le dispositif de mesure comportant au moins un dispositif de connexion (36) destiné à la connexion d'un dispositif électronique externe (37) pour transmettre les signaux de mesure du dispositif récepteur de rayon (6) à un dispositif d'évaluation (109) du dispositif électronique externe (37) afin d'évaluer les signaux de mesure, **caractérisé en ce**
**que** le logement d'échantillon (9) est conçu pour pouvoir être muni d'un récipient d'échantillon (24) avec un échantillon de fluide (3), le logement d'échantillon (9) comportant, sur les deux côtés opposés, respectivement une ouverture (25, 26) dans le manchon (112) pour y faire passer le récipient d'échantillon (24), les deux ouvertures (25, 26) rétrécissant en coupe transversale de telle manière qu'un récipient d'échantillon (24) avec une coupe transversale rétrécissant de manière correspondante peut y être introduit et être maintenu dans le logement d'échantillon (9).

2. Dispositif de mesure (100) selon la revendication 1, **caractérisé en ce**
**que** le dispositif de connexion (36) est un organe de connexion par câble, en particulier un organe de connexion par câble USB, ou un organe de connexion sans fil, en particulier un organe de connexion Bluetooth ou radioélectrique.

3. Dispositif de mesure (100) selon la revendication 1 ou 2, **caractérisé en ce**
**que** le dispositif de mesure (100) comporte un dispositif d'éclairage (4) destiné à générer le rayon lumineux (5), le dispositif d'éclairage (4) comportant de préférence au moins une DEL (32), en particulier une DEL laser, ou un réseau de DEL (33), les DEL (32) du réseau de DEL (33) pouvant en particulier être commandées individuellement ou ensemble.

4. Dispositif de mesure (100) selon l'une des revendications 1 à 3,
**caractérisé en ce**
**que** le tronçon de mesure (7) est formé dans la trajectoire du rayon lumineux (5), dans laquelle l'échantillon de fluide (3) peut être introduit.

5. Dispositif de mesure (100) selon l'une des revendications 1 à 4,
**caractérisé en ce**
**que** le dispositif de réception d'échantillon (2) est prévu fixe dans le boîtier (31) du dispositif de mesure (100) pour offrir un tronçon de mesure (7) constant ou est prévu de façon à pouvoir être rentré dans le boîtier (31) et sorti de celui-ci pour offrir un tronçon de mesure (7) variable, le tronçon de mesure (7) étant agrandi en sortant le dispositif de réception d'échantillon (2) hors du boîtier (31) et raccourci en rentrant le dispositif de réception d'échantillon (2) dans le boîtier.

6. Dispositif de mesure (100) selon la revendication 5, **caractérisé en ce**
**que** le dispositif de réception d'échantillon (2) peut être rentré dans le boîtier (31) et sorti de celui-ci le long du guide d'ondes optiques.

7. Dispositif de mesure (100) selon l'une des revendications 1 à 6,
**caractérisé en ce**
**que** le dispositif de mesure (100, 1) comporte un microcontrôleur (34) destiné à commander et/ou réguler le dispositif d'éclairage (4), le microcontrôleur (34) pouvant en particulier être commandé et/ou régulé par le dispositif électronique externe (37), la durée d'éclairage, l'intensité d'éclairage et/ou l'intervalle d'éclairage du dispositif d'éclairage (4) pouvant de préférence être commandés et/ou régulés par le microcontrôleur.

8. Dispositif de mesure (100) selon l'une des revendications précédentes,
**caractérisé en ce**
**que** le dispositif de mesure (100, 1) comporte un convertisseur analogique-numérique (20), qui transforme des signaux analogiques du dispositif récepteur de rayon (6) en signaux numériques et les transmet au microcontrôleur (34) et/ou au dispositif électronique externe (37) connecté au dispositif de connexion (36).

9. Dispositif de mesure (100) selon l'une des revendications précédentes,
**caractérisé en ce**
**que** le dispositif de mesure (100, 1) comporte une source d'énergie (11) propre et/ou peut être connecté à une source d'énergie externe au moyen du dispositif de connexion (36), et dans lequel le dispositif de mesure (1) comporte de préférence un dispositif commutateur (38) pour mettre en marche et arrêter le dispositif de mesure (1) .

10. Dispositif de mesure (100) selon l'une des revendications précédentes,
**caractérisé en ce**
**que** le dispositif de mesure (100, 1) comporte un dispositif de mémoire (111).

11. Dispositif de mesure (100) selon l'une des revendications précédentes,
**caractérisé en ce**
**que** le dispositif de mesure (100) comporte au moins un dispositif optique, en particulier au moins une lentille, un miroir ou un prisme.

12. Dispositif de mesure (100) selon l'une des revendications 1 à 10,
**caractérisé en ce**
**que** le logement d'échantillon (9) est conçu de manière à pouvoir être introduit dans l'échantillon de fluide (3) et être muni d'un récipient d'échantillon (24) avec l'échantillon de fluide (3).

13. Dispositif de mesure (100) selon l'une des revendications précédentes,
**caractérisé en ce**
**qu'**au moins une ouverture (25, 26) du logement d'échantillon (9) comporte un dispositif d'étanchéité pour rendre étanche le logement d'échantillon (9) par rapport à un récipient d'échantillon (24) reçu dans le logement d'échantillon (9).

14. Dispositif de mesure et d'évaluation (115) comportant un dispositif de mesure (100) selon l'une des revendications précédentes et un dispositif électronique (37) qui est connecté au dispositif de mesure (100).

15. Dispositif de mesure et d'évaluation (115) selon la revendication 14,
dans lequel le dispositif électronique (37) comporte un dispositif d'évaluation (109) destiné à évaluer les signaux de mesure du dispositif de mesure (100), le dispositif électronique (37) comportant de préférence un dispositif d'affichage (110), un dispositif GPS (101), un dispositif de mesure de temps (102), un dispositif de caméra (103), un dispositif de mémoire (104), un dispositif d'émission (105), un dispositif de réception (106), un dispositif de scanner (107) et/ou un dispositif de microphone (108), le dispositif électronique (37) associant et/ou évaluant de manière particulièrement préférée les signaux de mesure à/avec des informations du dispositif GPS (101), du dispositif de mesure de temps (102), du dispositif de caméra (103), du dispositif de mémoire (104), du dispositif de scanner (107) et/ou du dispositif de microphone (108) et le dispositif électronique (37) étant un mobile multifonction, un ordinateur personnel, une tablette tactile, un serveur ou un ordinateur portable.

16. Système de données de mesure comportant au moins un dispositif de mesure et d'évaluation (115) selon l'une des revendications 14 à 15 et un second dispositif électronique (137).

17. Système de données de mesure selon la revendication 16, dans lequel le second dispositif électronique (137) peut être connecté par câble et/ou sans fil au dispositif respectivement électronique (37) du dispositif de mesure et d'évaluation (115) et dans lequel le second dispositif électronique (137) est un serveur, un ordinateur personnel, un mobile multifonction, une montre intelligente, un ordinateur portable ou une tablette tactile.
